(19) Europäisches Patentamt
European Patent Office
Office européen des brevets

(11) **EP 4 668 640 A1**

(12) **EUROPEAN PATENT APPLICATION**
published in accordance with Art. 153(4) EPC

(43) Date of publication:
**24.12.2025 Bulletin 2025/52**

(21) Application number: **23929478.8**

(22) Date of filing: **31.03.2023**

(51) International Patent Classification (IPC):
**H04L 5/00** (2006.01)

(52) Cooperative Patent Classification (CPC):
**H04L 5/00**

(86) International application number:
**PCT/CN2023/085696**

(87) International publication number:
**WO 2024/197895 (03.10.2024 Gazette 2024/40)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicant: **Huawei Technologies Co., Ltd.
Shenzhen, Guangdong 518129 (CN)**

(72) Inventors:
• **JIANG, Chenglong
  Shenzhen, Guangdong 518129 (CN)**
• **BI, Xiaoyan
  Shenzhen, Guangdong 518129 (CN)**
• **LIU, Lei
  Shenzhen, Guangdong 518129 (CN)**
• **LIU, Yong
  Shenzhen, Guangdong 518129 (CN)**

(74) Representative: **Pfenning, Meinig & Partner mbB
Patent- und Rechtsanwälte
Theresienhöhe 11a
80339 München (DE)**

(54) **COMMUNICATION METHOD AND RELATED DEVICE**

(57)  This application provides a communication method and a related device, so that in a scenario in which data streams of at least two terminal devices multiplex a same time-frequency resource, a first terminal device can determine downlink channel information in the scenario based on an indication of a network device, and demodulate downlink data based on the downlink channel information. This can reduce interference caused by a signal of another terminal device, and improve a signal demodulation success rate. In the method, the first terminal device receives first information, where the first information is used for determining a first parameter, the first parameter is used for determining channel information of a channel between the network device and the first terminal device when the data streams of the at least two terminal devices multiplex the same time-frequency resource, and the at least two terminal devices include the first terminal device; the first terminal device receives a demodulation reference signal (demodulation reference signal, DMRS) and the downlink data; and the first terminal device determines the downlink channel information based on the DMRS and the first parameter, where the downlink channel information is used for demodulating the downlink data.

FIG. 3

**Description**

TECHNICAL FIELD

This application relates to the communication field, and in particular, to a communication method and a related device.

BACKGROUND

In a wireless communication system, a signal that is sent by a network device and that is used for carrying data needs to be modulated, and correspondingly, a signal received by a terminal device is a modulated signal. In addition, after receiving the signal, the terminal device usually needs to demodulate the received signal, to obtain the data carried in the signal.

Currently, as a key technology in wireless communication, a multiple-input multiple-output (multiple-input multiple-output, MIMO) technology can be used for satisfying a requirement for high-speed transmission. Based on the MIMO technology, the network device can multiplex a same time-frequency resource to send a signal to a plurality of terminal devices, so that the plurality of terminal devices can receive and demodulate respective signals on the same time-frequency resource. In this way, space dimension resources can be used, to improve a capacity and spectral efficiency of the communication system without increasing a system bandwidth.

However, a terminal device is inevitably interfered with by a signal of another terminal device in a signal demodulation process. This may cause a signal demodulation failure. Therefore, when the signals of the plurality of terminal devices multiplex the same time-frequency resource, how to reduce interference to improve a signal demodulation success rate is an urgent technical problem to be resolved.

SUMMARY

This application provides a communication method and a related device, so that in a scenario in which data streams of at least two terminal devices multiplex a same time-frequency resource, a first terminal device can determine downlink channel information in the scenario based on an indication of a network device, and demodulate downlink data based on the downlink channel information. This can reduce interference caused by a signal of another terminal device, and improve a signal demodulation success rate.

A first aspect of this application provides a communication method. The method is performed by a first terminal device, the method is performed by a part of components (for example, a processor, a chip, or a chip system) in the first terminal device, or the method may be implemented by a logic module or software that can implement all or some functions of the first terminal device. In the first aspect and possible implementations of the first aspect, an example in which the communication method is performed by the first terminal device is used for description. In the method, the first terminal device receives first information, where the first information is used for determining a first parameter, the first parameter is used for determining channel information of a channel between a network device and the first terminal device when data streams of at least two terminal devices multiplex a same time-frequency resource, and the at least two terminal devices include the first terminal device; the first terminal device receives a demodulation reference signal (demodulation reference signal, DMRS) and downlink data; and the first terminal device determines downlink channel information based on the DMRS and the first parameter, where the downlink channel information is used for demodulating the downlink data.

Based on the foregoing technical solution, the first terminal device may determine the first parameter based on the received first information, and the first terminal device may subsequently obtain, based on the first parameter, the downlink channel information used for demodulating the downlink data. The first parameter is used for determining the channel information of the channel between the network device and the first terminal device when the data streams of the at least two terminal devices multiplex the same time-frequency resource. Therefore, in a scenario in which the data streams of the at least two terminal devices multiplex the same time-frequency resource, the first terminal device may determine the downlink channel information in the scenario based on an indication of the network device, and demodulate the downlink data based on the downlink channel information. This can reduce interference caused by a signal of another terminal device, and improve a signal demodulation success rate.

In a possible implementation of the first aspect, the first information includes at least one of the following: a layer quantity of a data stream the first terminal device; an index of a matrix that corresponds to the first parameter and that is in a preconfigured matrix set, where the matrix set includes at least two matrices; a left singular vector obtained through matrix decomposition based on the channel information of the channel between the network device and the first terminal device; or the first parameter.

Based on the foregoing technical solution, the first information received by the first terminal device may be implemented by using at least one of the foregoing, so that the first terminal device determines the first parameter in a direct or indirect manner, thereby improving flexibility of implementing the solution.

In a possible implementation of the first aspect, a matrix dimension of the matrix corresponding to the first parameter is equal to a quantity of receive ports of the first terminal device.

Based on the foregoing technical solution, as one of bases for determining the downlink channel information, the matrix dimension of the matrix corresponding to the first parameter is equal to the quantity of receive ports of the first terminal device. Therefore, the matrix dimension of the parameter for determining the downlink channel information is limited, so that the downlink channel information can adapt to a dimension of the receive antenna port of the first terminal device.

In a possible implementation of the first aspect, the downlink data and a data stream of another terminal device multiplex a same time-frequency resource.

Based on the foregoing technical solution, the downlink data received by the first terminal device and the data streams of the another terminal device multiplex the same time-frequency resource, so that the foregoing solution can be applied to the scenario in which the data streams of the at least two terminal devices multiplex the same time-frequency resource.

Optionally, when the downlink data received by the first terminal device and the data streams of the another terminal device do not multiplex the same time-frequency resource, the first terminal device may alternatively determine the downlink channel information by using the first parameter, and correctly demodulate the downlink data based on the determined downlink channel information. In other words, whether a scenario in which data streams of a plurality of terminal devices multiplex a same time-frequency resource for transmission exists is not limited in the foregoing technical solution. To be specific, regardless of whether the downlink data received by the first terminal device and the data streams of the another terminal device multiplex the same time-frequency resource, the downlink channel information may be determined based on the first parameter, and the downlink data may be correctly demodulated.

In a possible implementation of the first aspect, a rank (rank) of the matrix corresponding to the first parameter is greater than or equal to the layer quantity of the data stream of the first terminal device; and the layer quantity of the data stream of the first terminal device is a scalar, or a value of the layer quantity of the data stream of the first terminal device is a value of a layer sequence number of the data stream of the first terminal device in the data streams of the at least two terminal devices.

Based on the foregoing technical solution, as one of the bases for determining the downlink channel information, the rank of the matrix corresponding to the first parameter is greater than or equal to the layer quantity of the data stream of the first terminal device. Therefore, the rank of the matrix of the parameter for determining the downlink channel information is limited, so that the downlink channel information can adapt to a quantity of real-time scheduled layers of the first terminal device, to avoid the interference caused by the signal of the another terminal device.

In a possible implementation of the first aspect, a value of the scalar of the layer quantity of the data stream of the first terminal device or a value of a vector dimension of the data stream of the first terminal device satisfies at least one of the following: not less than the quantity of real-time scheduled layers of the first terminal device, not greater than a quantity of channel multipaths or a rank of a channel matrix of the first terminal device, or not less than a quantity of multiplexed ports of a demodulation reference signal sending port.

Based on the foregoing technical solution, the value of the scalar of the quantity of data streams of the downlink data of the first terminal device or the value of the vector dimension satisfies the at least one of the foregoing, and a plurality of implementations for the data streams of the downlink data are provided.

In a possible implementation of the first aspect, before the first terminal device receives the first information, the method further includes: The first terminal device sends a first reference signal, where the first reference signal is used for determining the first parameter.

Based on the foregoing technical solution, before the first terminal device receives the first information, the first terminal device may further send the first reference signal, so that the network device determines the first parameter based on uplink channel information indicated by the first reference signal. The first reference signal sent by the first terminal device is an uplink reference signal, so that the network device may obtain the uplink channel information by using the uplink reference signal and determine the first parameter.

In a possible implementation of the first aspect, the DMRS and the downlink data are obtained by performing precoding based on the first parameter.

Based on the foregoing technical solution, because the first terminal device needs to use the first parameter as one of the bases for determining the downlink channel information, the DMRS and the downlink data sent by the network device are obtained by performing precoding based on the first parameter, so that the first terminal device may obtain more accurate downlink channel information, to improve a success rate of subsequent demodulation based on the downlink channel information.

In a possible implementation of the first aspect, after the first terminal device receives the first information, the method further includes: The first terminal device receives a second reference signal, where the second reference signal is generated based on the first parameter; and the first terminal device sends a measurement result of the second reference signal, where the measurement result of the second reference signal is used for determining precoding information of the DMRS and the downlink data.

Based on the foregoing technical solution, after the first terminal device receives the first information, the first terminal device may further receive the second reference signal generated based on the first parameter, and send the measurement result of the second reference signal, so that the network device may subsequently determine the precoding information of the DMRS and the downlink data based on the measurement result of the second reference signal. The second reference signal is a downlink reference signal, so that the network device may determine the precoding information of the DMRS and the downlink data by using channel information indicated by the measurement result of the downlink reference signal by the first terminal device.

In a possible implementation of the first aspect, after the first terminal device receives the first information, the method further includes: The first terminal device sends a third reference signal, where the third reference signal is generated based on the first parameter, and the third reference signal is used for determining the precoding information of the DMRS and the downlink data.

Based on the foregoing technical solution, after the first terminal device receives the first information, the first terminal device may further send the third reference signal generated based on the first parameter, so that the network device may subsequently determine the precoding information of the DMRS and the downlink data based on the third reference signal. The third reference signal is an uplink reference signal, so that the network device may determine the precoding information of the DMRS and the downlink data by using channel information indicated by the uplink reference signal sent by the first terminal device.

A second aspect of this application provides a communication method. The method is performed by a network device, the method is performed by a part of components (for example, a processor, a chip, or a chip system) in the network device, or the method may be implemented by a logic module or software that can implement all or some functions of the network device. In a first aspect and possible implementations of the first aspect, an example in which the communication method is performed by the network device is used for description, and the network device may be a first terminal device or a network device. In the method, the network device sends first information, where the first information is used for determining a first parameter, the first parameter is used for determining channel information of a channel between the network device and the first terminal device when data streams of at least two terminal devices multiplex a same time-frequency resource, and the at least two terminal devices include the first terminal device; and the network device sends a demodulation reference signal DMRS and downlink data, where the DMRS and the first parameter are used for determining downlink channel information, and the downlink channel information is used for demodulating the downlink data.

Based on the foregoing technical solution, the first information sent by the network device is used for determining the first parameter, so that the first terminal device may subsequently obtain, based on the first parameter, the downlink channel information used for demodulating the downlink data. The first parameter is used for determining the channel information of the channel between the network device and the first terminal device when the data streams of the at least two terminal devices multiplex the same time-frequency resource. Therefore, in a scenario in which the data streams of the at least two terminal devices multiplex the same time-frequency resource, the first terminal device may determine the downlink channel information in the scenario based on an indication of the network device, and demodulate the downlink data based on the downlink channel information. This can reduce interference caused by a signal of another terminal device, and improve a signal demodulation success rate.

In a possible implementation of the second aspect, the first information includes at least one of the following: a layer quantity of a data stream the first terminal device; an index of a matrix that corresponds to the first parameter and that is in a preconfigured matrix set, where the matrix set includes at least two matrices; a left singular vector obtained through matrix decomposition based on the channel information of the channel between the network device and the first terminal device; or the first parameter.

Based on the foregoing technical solution, the first information received by the first terminal device may be implemented by using at least one of the foregoing, so that the first terminal device determines the first parameter in a direct or indirect manner, thereby improving flexibility of implementing the solution.

In a possible implementation of the second aspect, a matrix dimension of the matrix corresponding to the first parameter is equal to a quantity of receive ports of the first terminal device.

Based on the foregoing technical solution, as one of bases for determining the downlink channel information, the matrix dimension of the matrix corresponding to the first parameter is equal to the quantity of receive ports of the first terminal device. Therefore, the matrix dimension of the parameter for determining the downlink channel information is limited, so that the downlink channel information can adapt to a dimension of the receive antenna port of the first terminal device.

In a possible implementation of the second aspect, the downlink data and a data stream of another terminal device multiplex a same time-frequency resource.

Based on the foregoing technical solution, the downlink data received by the first terminal device and the data streams of the another terminal device multiplex the same time-frequency resource, so that the foregoing solution can be applied to the scenario in which the data streams of the at least two terminal devices multiplex the same time-frequency resource.

Optionally, when the downlink data received by the first terminal device and the data streams of the another terminal device do not multiplex the same time-frequency resource, the first terminal device may alternatively determine the downlink channel information by using the first parameter, and correctly demodulate the downlink data based on the determined downlink channel information. In other words, whether a scenario in which data streams of a plurality of terminal devices multiplex a same time-frequency resource for transmission exists is not limited in the foregoing technical solution. To be specific, regardless of whether the downlink data received by the first terminal device and the data streams of the another terminal device multiplex the same time-frequency resource, the downlink channel information may be determined based on the first parameter, and the downlink data may be correctly demodulated.

In a possible implementation of the second aspect, a rank of the matrix corresponding to the first parameter is greater than or equal to the layer quantity of the data stream of the first terminal device; and the layer quantity of the data stream of the first terminal device is a scalar, or a value of the layer quantity of the data stream of the first terminal device is a value of a layer sequence number of the data stream of the first terminal device in the data streams of the at least two terminal devices.

Based on the foregoing technical solution, as one of the bases for determining the downlink channel information, the rank of the matrix corresponding to the first parameter is greater than or equal to the layer quantity of the data stream of the first terminal device. Therefore, the rank of the matrix of the parameter for determining the downlink channel information is limited, so that the downlink channel information can adapt to a quantity of real-time scheduled layers of the first terminal device, to avoid the interference caused by the signal of the another terminal device.

In a possible implementation of the second aspect, a value of the scalar of the layer quantity of the data stream of the first terminal device or a value of a vector dimension of the data stream of the first terminal device satisfies at least one of the following: not less than the quantity of real-time scheduled layers of the first terminal device, not greater than a quantity of channel multipaths or a rank of a channel matrix of the first terminal device, or not less than a quantity of multiplexed ports of a demodulation reference signal sending port.

Based on the foregoing technical solution, the value of the scalar of the quantity of data streams of the downlink data of the first terminal device or the value of the vector dimension satisfies the at least one of the foregoing, and a plurality of implementations for the data streams of the downlink data are provided.

In a possible implementation of the second aspect, before the network device sends the first information, the method further includes: The network device receives a first reference signal, where the first reference signal is used for determining the first parameter.

Based on the foregoing technical solution, before the network device sends the first information, the network device may further receive the first reference signal, so that the network device determines the first parameter based on uplink channel information indicated by the first reference signal. The first reference signal sent by the first terminal device is an uplink reference signal, so that the network device may obtain the uplink channel information by using the uplink reference signal and determine the first parameter.

In a possible implementation of the second aspect, the DMRS and the downlink data are obtained by performing precoding based on the first parameter.

Based on the foregoing technical solution, because the first terminal device needs to use the first parameter as one of the bases for determining the downlink channel information, the DMRS and the downlink data sent by the network device are obtained by performing precoding based on the first parameter, so that the first terminal device may obtain more accurate downlink channel information, to improve a success rate of subsequent demodulation based on the downlink channel information.

In a possible implementation of the second aspect, after the network device sends the first information, the method further includes: The network device sends a second reference signal, where the second reference signal is generated based on the first parameter; and the network device receives a measurement result of the second reference signal, where the measurement result of the second reference signal is used for determining precoding information of the DMRS and the downlink data.

Based on the foregoing technical solution, after the network device sends the first information, the network device may further send the second reference signal generated based on the first parameter, and receive the measurement result of the second reference signal, so that the network device may subsequently determine the precoding information of the DMRS and the downlink data based on the measurement result of the second reference signal. The second reference signal is a downlink reference signal, so that the network device may determine the precoding information of the DMRS and the downlink data by using channel information indicated by the measurement result of the downlink reference signal by the first terminal device.

In a possible implementation of the second aspect, after the network device sends the first information, the method further includes: The network device receives a third reference signal, where the third reference signal is generated based on the first parameter, and the third reference signal is used for determining the precoding information of the DMRS and the downlink data.

Based on the foregoing technical solution, after the network device sends the first information, the network device may further receive the third reference signal generated based on the first parameter, so that the network device may subsequently determine the precoding information of the DMRS and the downlink data based on the third reference signal. The third reference signal is an uplink reference signal, so that the network device may determine the precoding information of the DMRS and the downlink data by using channel information indicated by the uplink reference signal sent by the first terminal device.

A third aspect of this application provides a communication apparatus. The apparatus may implement the method in any one of the first aspect or the possible implementations of the first aspect. The apparatus includes a corresponding unit or module configured to perform the method. The unit or module included in the apparatus can be implemented by software and/or hardware. For example, the apparatus may be a first terminal device, the apparatus may be a component (for example, a processor, a chip, or a chip system) in the first terminal device, or the apparatus may be a logic module or software that can implement all or some functions of the first terminal device.

The apparatus includes a transceiver unit and a processing unit. The transceiver unit is configured to receive first information, where the first information is used for determining a first parameter, the first parameter is used for determining channel information of a channel between a network device and the first terminal device when data streams of at least two terminal devices multiplex a same time-frequency resource, and the at least two terminal devices include the first terminal device. The transceiver unit is further configured to receive a demodulation reference signal DMRS and downlink data. The processing unit is configured to determine downlink channel information based on the DMRS and the first parameter, where the downlink channel information is used for demodulating the downlink data.

In a possible implementation of the third aspect, the first information includes at least one of the following: a layer quantity of a data stream the first terminal device; an index of a matrix that corresponds to the first parameter and that is in a preconfigured matrix set, where the matrix set includes at least two matrices; a left singular vector obtained through matrix decomposition based on the channel information of the channel between the network device and the first terminal device; or the first parameter.

In a possible implementation of the third aspect, a matrix dimension of the matrix corresponding to the first parameter is equal to a quantity of receive ports of the first terminal device.

In a possible implementation of the third aspect, the downlink data and a data stream of another terminal device multiplex a same time-frequency resource.

In a possible implementation of the third aspect, a rank of the matrix corresponding to the first parameter is greater than or equal to the layer quantity of the data stream of the first terminal device; and the layer quantity of the data stream of the first terminal device is a scalar, or a value of the layer quantity of the data stream of the first terminal device is a value of a layer sequence number of the data stream of the first terminal device in the data streams of the at least two terminal devices.

In a possible implementation of the third aspect, a value of the scalar of the layer quantity of the data stream of the first terminal device or a value of a vector dimension of the data stream of the first terminal device satisfies at least one of the following: not less than a quantity of real-time scheduled layers of the first terminal device, not greater than a quantity of channel multipaths or a rank of a channel matrix of the first terminal device, or not less than a quantity of multiplexed ports of a demodulation reference signal sending port.

In a possible implementation of the third aspect, the transceiver unit is further configured to send a first reference signal, where the first reference signal is used for determining the first parameter.

In a possible implementation of the third aspect, the DMRS and the downlink data are obtained by performing precoding based on the first parameter.

In a possible implementation of the third aspect, the transceiver unit is further configured to receive a second reference signal, where the second reference signal is generated based on the first parameter; and the transceiver unit is further configured to send a measurement result of the second reference signal, where the measurement result of the second reference signal is used for determining precoding information of the DMRS and the downlink data.

In a possible implementation of the third aspect, the transceiver unit is further configured to send a third reference signal, where the third reference signal is generated based on the first parameter, and the third reference signal is used for determining the precoding information of the DMRS and the downlink data.

In the third aspect of this application, a composition module of the communication apparatus may be further configured to: perform the steps performed in the possible implementations of the first aspect, and achieve corresponding technical effects. For details, refer to the first aspect. Details are not described herein again.

A fourth aspect of this application provides a communication apparatus. The apparatus may implement the method in any one of the second aspect or the possible implementations of the second aspect. The apparatus includes a corresponding unit or module configured to perform the method. The unit or module included in the apparatus can be implemented by software and/or hardware. For example, the apparatus may be a network device, the apparatus may be a component (for example, a processor, a chip, or a chip system) in the network device, or the apparatus may be a logic module or software that can implement all or some functions of the network device.

The apparatus includes a transceiver unit and a processing unit. The processing unit is configured to determine first information, a demodulation reference signal DMRS, and downlink data. The transceiver unit is configured to send the first information, where the first information is used for determining a first parameter, the first parameter is used for determining channel information of a channel between the network device and a first terminal device when data streams of at least two terminal devices multiplex a same time-frequency resource, and the at least two terminal devices include the first terminal device. The transceiver unit is further configured to send the DMRS and the downlink data, where the DMRS and the first parameter are used for determining downlink channel information, and the downlink channel information is used for demodulating the downlink data.

In a possible implementation of the fourth aspect, the first information includes at least one of the following: a layer quantity of a data stream the first terminal device; an index of a matrix that corresponds to the first parameter and that is in a preconfigured matrix set, where the matrix set includes at least two matrices; a left singular vector obtained through matrix decomposition based on the channel information of the channel between the network device and the first terminal device; or the first parameter.

In a possible implementation of the fourth aspect, a matrix dimension of the matrix corresponding to the first parameter is equal to a quantity of receive ports of the first terminal device.

In a possible implementation of the fourth aspect, the downlink data and a data stream of another terminal device multiplex a same time-frequency resource.

In a possible implementation of the fourth aspect, a rank of the matrix corresponding to the first parameter is greater than or equal to the layer quantity of the data stream of the first terminal device; and the layer quantity of the data stream of the first terminal device is a scalar, or a value of the layer quantity of the data stream of the first terminal device is a value of a layer sequence number of the data stream of the first terminal device in the data streams of the at least two terminal devices.

In a possible implementation of the fourth aspect, a value of the scalar of the layer quantity of the data stream of the first terminal device or a value of a vector dimension of the data stream of the first terminal device satisfies at least one of the following: not less than a quantity of real-time scheduled layers of the first terminal device, not greater than a quantity of channel multipaths or a rank of a channel matrix of the first terminal device, or not less than a quantity of multiplexed ports of a demodulation reference signal sending port.

In a possible implementation of the fourth aspect, the transceiver unit is further configured to receive a first reference signal, where the first reference signal is used for determining the first parameter.

In a possible implementation of the fourth aspect, the DMRS and the downlink data are obtained by performing precoding based on the first parameter.

In a possible implementation of the fourth aspect, the transceiver unit is further configured to send a second reference signal, where the second reference signal is generated based on the first parameter; and the transceiver unit is further configured to receive a measurement result of the second reference signal, where the measurement result of the second reference signal is used for determining precoding information of the DMRS and the downlink data.

In a possible implementation of the fourth aspect, the transceiver unit is further configured to receive a third reference signal, where the third reference signal is generated based on the first parameter, and the third reference signal is used for determining the precoding information of the DMRS and the downlink data.

In the fourth aspect of this application, a composition module of the communication apparatus may be further configured to: perform the steps performed in the possible implementations of the second aspect, and achieve corresponding technical effects. For details, refer to the second aspect. Details are not described herein again.

A fifth aspect of this application provides a communication apparatus, including at least one processor. The at least one processor is coupled to a memory, the memory is configured to store a program or instructions, and the at least one processor is configured to execute the program or the instructions, to enable the apparatus to implement the method according to any one of the first aspect or the possible implementations of the first aspect.

A sixth aspect of embodiments of this application provides a communication apparatus, including at least one processor. The at least one processor is coupled to a memory, the memory is configured to store a program or instructions, and the at least one processor is configured to execute the program or the instructions, to enable the apparatus to implement the method according to any one of the second aspect or the possible implementations of the second aspect.

A seventh aspect of embodiments of this application provides a communication apparatus, including at least one logic circuit and an input/output interface. The input/output interface is configured to input first information, a DMRS, and downlink data, and the logic circuit is configured to perform the method according to any one of the first aspect or the possible implementations of the first aspect.

An eighth aspect of embodiments of this application provides a communication apparatus, including at least one logic circuit and an input/output interface. The input/output interface is configured to output first information, a DMRS, and downlink data, and the logic circuit is configured to perform the method according to any one of the second aspect or the possible implementations of the second aspect.

A ninth aspect of embodiments of this application provides a computer-readable storage medium. The computer-readable storage medium is configured to store one or more computer-executable instructions. When the computer-executable instructions are executed by a processor, the processor performs the method according to any one of the first aspect or the possible implementations of the first aspect, or the processor performs the method according to any one of the second aspect or the possible implementations of the second aspect.

A tenth aspect of embodiments of this application provides a computer program product (or referred to as a computer program). When the computer program product is executed by a processor, the processor performs the method according to any one of the first aspect or the possible implementations of the first aspect, or the processor performs the method according to any one of the second aspect or the possible implementations of the second aspect.

An eleventh aspect of embodiments of this application provides a chip system. The chip system includes at least one processor, configured to support a communication apparatus in implementing a function in any one of the first aspect or the possible implementations of the first aspect, or configured to support the communication apparatus in implementing a function in any one of the second aspect or the possible implementations of the second aspect.

In a possible design, the chip system may further include a memory. The memory is configured to store program instructions and data that are necessary for the communication apparatus. The chip system may include a chip, or may include a chip and another discrete component. Optionally, the chip system further includes an interface circuit, and the interface circuit provides program instructions and/or data for the at least one processor.

A twelfth aspect of embodiments of this application provides a communication system. The communication system includes the communication apparatus in the third aspect and the communication apparatus in the fourth aspect, the communication system includes the communication apparatus in the fifth aspect and the communication apparatus in the sixth aspect, and/or the communication system includes the communication apparatus in the seventh aspect and the communication apparatus in the eighth aspect.

For technical effects brought by any design manner of the third aspect to the twelfth aspect, refer to technical effects brought by different implementations of the first aspect to the fourth aspect. Details are not described herein again.

It should be understood that, for a component in a device, the foregoing "sending" may be referred to as "outputting", and the foregoing "receiving" may be referred to as "inputting".

## BRIEF DESCRIPTION OF DRAWINGS

FIG. 1a is a diagram of a communication system according to this application;

FIG. 1b is another diagram of a communication system according to this application;

FIG. 2 is a diagram of a signal simulation diagram of a communication method according to this application;

FIG. 3 is a diagram of a communication method according to this application;

FIG. 4a is another diagram of a communication method according to this application;

FIG. 4b is another diagram of a communication method according to this application;

FIG. 4c is another diagram of a communication method according to this application;

FIG. 5 is a diagram of a communication apparatus according to this application;

FIG. 6 is another diagram of a communication apparatus according to this application;

FIG. 7 is another diagram of a communication apparatus according to this application; and

FIG. 8 is another diagram of a communication apparatus according to this application.

## DESCRIPTION OF EMBODIMENTS

The following describes the technical solutions in embodiments of this application with reference to accompanying drawings in embodiments of this application. First, some terms in embodiments of this application are explained and described, to facilitate understanding of a person skilled in the art.

(1) Terminal device: The terminal device may be a wireless terminal device that can receive scheduling and indication information of a network device. The wireless terminal device may be a device that provides voice and/or data connectivity for a user, a handheld device having a wireless connection function, or another processing device connected to a wireless modem.

The terminal device may communicate with one or more core networks or the Internet through a radio access network (radio access network, RAN). The terminal device may be a mobile terminal device such as a mobile telephone (or referred to as a "cellular" phone or a mobile phone (mobile phone)), a computer, and a data card. For example, the terminal device may be a portable, pocket-sized, handheld, computer built-in, or vehicle-mounted mobile apparatus that exchanges a voice and/or data with the radio access network. For example, the wireless terminal device may be a device such as a personal communications service (personal communications service, PCS) phone, a cordless phone, a session initiation protocol (SIP) phone, a wireless local loop (wireless local loop, WLL) station, a personal digital assistant (personal digital assistant, PDA), a tablet computer (Pad), or a computer having a wireless transceiver function. The wireless terminal device may also be referred to as a system, a subscriber unit (subscriber unit), a subscriber station (subscriber station), a mobile station (mobile station, MS), a remote station (remote station), an access point (access point, AP), a remote terminal device (remote terminal), an access terminal device (access terminal), a user terminal device (user terminal), a user agent (user agent), a subscriber station device (subscriber station, SS), a customer premises equipment (customer premises equipment, CPE), a terminal (terminal), user equipment (user equipment, UE), a mobile terminal (mobile terminal, MT), or the like. The terminal device may alternatively be a wearable device and a terminal device in a next generation communication system, for example, a terminal device in 5G communication system or a terminal device in a future evolved public land mobile network (public land mobile network, PLMN).

(2) Network device: The network device may be a device in a wireless network. For example, the network device may be a radio access network (radio access network, RAN) node (or device), or may be referred to as a base station, through which the terminal device accesses the wireless network. Currently, some examples of the RAN device are: a next-generation NodeB (generation NodeB, gNodeB) in a 5G communication system, a transmission reception point (transmission reception point, TRP), an evolved NodeB (evolved NodeB, eNB), a radio network controller (radio network controller, RNC), a NodeB (NodeB, NB), a base station controller (base station controller, BSC), a base transceiver station (base transceiver station, BTS), a home base station (for example, a home evolved NodeB or a home NodeB, HNB), a baseband unit (baseband unit, BBU), a wireless fidelity (wireless fidelity, Wi-Fi) access point (access point, AP), or the like. In addition, in a network structure, radio access is implemented by using a plurality of network nodes, and different network nodes separately implement some functions of a base station. For example, the network node may be a central unit (central unit, CU), a distributed unit (distributed unit, DU), a CU-control plane (control plane, CP), a CU-user plane (user plane, UP), a radio unit (radio unit, RU), or the like. The CU and the DU may be separately disposed, or may be included in a same network element, for example, a baseband unit (baseband unit, BBU). The RU may be included in a radio frequency device or a radio frequency unit, for example, included in a remote radio unit (remote radio unit, RRU), an active antenna unit (active antenna unit, AAU), or a remote radio head (remote radio head, RRH). In different systems, the CU (or the CU-CP and the CU-UP), the DU, or the RU may alternatively have different names, but a person skilled in the art may understand meanings thereof. For example, in an ORAN system, the CU may also be referred to as an open CU (O-CU), the DU may also be referred to as an open DU (O-DU), the CU-CP may also be referred to as an open CU-CP (O-CU-CP), the CU-UP may also be referred to as an open CU-UP (O-CU-UP), and the RU may also be referred to as an open RU (O-RU). Any unit in the CU (or the CU-CP or the CU-UP), the DU, and the RU may be implemented by using a software module, a hardware module, or a combination of the software module and the hardware module.

The network device can send configuration information (for example, carried in a scheduling message and/or an indication message) to the terminal device. The terminal device further performs network configuration based on the configuration information, so that network configuration of the network device and the terminal device is aligned. Alternatively, through network configuration preset in the network device and network configuration preset in the terminal device, the network configuration of the network device and the terminal device is aligned. Specifically, "alignment" means that when there is an interaction message between the network device and the terminal device, the network device and the terminal device have a consistent understanding of a carrier frequency for sending and receiving the interaction message, determining of a type of the interaction message, a meaning of field information carried in the interaction message, or another configuration of the interaction message.

In addition, in another possible case, the network device may be another apparatus providing a wireless communication function for the terminal device. A specific technology and a specific device form that are used by the network device are not limited in embodiments of this application. For ease of description, this is not limited in embodiments of this application.

The network device may further include a core network device. The core network device includes, for example, an access and mobility management function (access and mobility management function, AMF), a user plane function (user plane function, UPF), or a session management function (session management function, SMF).

In embodiments of this application, an apparatus configured to implement a function of the network device may be a network device, or may be an apparatus, for example, a chip system, that can support the network device in implementing the function. The apparatus may be mounted in the network device. In the technical solutions provided in embodiments of this application, an example in which the apparatus configured to implement the function of the network device is a network device is used for describing the technical solutions provided in embodiments of this application.

(3) Configuration and preconfiguration: In this application, both the configuration and the preconfiguration are used. The configuration means that a network device such as a base station or a server sends configuration information of some parameters or parameter values to a terminal by using a message or signaling, so that the terminal determines a communication parameter or a transmission resource based on the values or the information. Similar to the configuration, the preconfiguration may be a manner in which a network device such as a base station or a server sends parameter information or a value to a terminal through a communication link or a carrier. Alternatively, the preconfiguration may be a manner in which a corresponding parameter or parameter value may be defined (for example, a value of a parameter is specified in a standard), or a manner in which a related parameter or value is written into a terminal device in advance. This is not limited in this application. Further, these values and parameters may be changed or updated.

(4) Precoding technology: When a channel state is known, a transmitter may process a to-be-sent signal by using a precoding matrix that matches a channel, and then send the to-be-sent signal, so that a precoded sent signal adapts to the channel. Therefore, in comparison with a processing process in which a receiver receives a non-precoded sent signal and eliminates inter-channel impact, a processing process in which the receiver receives the precoded sent signal and eliminates inter-channel impact is less complicated. Therefore, precoding processing is performed on the to-be-sent signal, so that received signal quality (for example, a signal to interference plus noise ratio (signal to interference plus noise ratio, SINR)) is improved. Transmission between the transmitter and a plurality of receivers can further be performed on a same time-frequency resource by using the precoding technology. That is, multi-user multiple-input multiple-output (multi-user multiple-input multiple-output, MU-MIMO) is implemented.

Optionally, the transmitter may be a network device, and the receiver may be a terminal device; or the transmitter may be a terminal device, and the receiver may be a terminal device.

It should be understood that related descriptions of the precoding technology are merely an example for ease of understanding, and are not intended to limit the protection scope of embodiments of this application. In a specific implementation process, the transmitter may alternatively perform precoding in another manner. For example, when channel information (for example, but not limited to a channel matrix) cannot be obtained, precoding or the like is performed by using a preset precoding matrix or by using weighted processing. For brevity, specific content thereof is not described in this specification.

(5) Antenna port: The antenna port may be referred to as a port for short. It may be understood as a transmit antenna identified by a receiver, or a transmit antenna that can be spatially distinguished. One antenna port may be preconfigured for each virtual antenna, each virtual antenna may be a weighted combination of a plurality of physical antennas, and each antenna port may correspond to one reference signal. Therefore, each antenna port may be referred to as a reference signal port, for example, a demodulation reference signal (demodulation reference signal, DMRS) port or a sounding reference signal (sounding reference signal, SRS) port.

(6) In this application, "indicating" may include "directly indicating" and "indirectly indicating". When a piece of indication information is described as indicating A, it may be understood as that the indication information carries A, directly indicates A, or indirectly indicates A.

In this application, information indicated by the indication information is referred to as to-be-indicated information. In a specific implementation process, there are a plurality of manners of indicating the to-be-indicated information. For example, the manners include but are not limited to a manner in which the to-be-indicated information, for example, the to-be-indicated information or an index of the to-be-indicated information, may be directly indicated. Alternatively, the to-be-indicated information may be indirectly indicated by indicating other information, and there is an association relationship between the other information and the to-be-indicated information. Alternatively, only a part of the to-be-indicated information may be indicated, and the other part of the to-be-indicated information is known or pre-agreed on. For example, specific information may alternatively be indicated by using an arrangement sequence of a plurality of pieces of information that is pre-agreed on (for example, stipulated in a protocol), to reduce indication overheads to some extent.

The to-be-indicated information may be sent as a whole, or may be divided into a plurality of pieces of sub-information for separate sending. In addition, sending periodicities and/or sending occasions of these pieces of sub-information may be the same or may be different. A specific sending method is not limited in this application. The sending periodicities and/or the sending occasions of these pieces of sub-information may be predefined, for example, predefined according to a protocol, or may be configured by a transmitter device by sending configuration information to a receiver device. The configuration information may include, for example, but not limited to, one or a combination of at least two of radio resource control signaling, medium access control (medium access control, MAC) layer signaling, and physical layer signaling. The radio resource control signaling includes, for example, radio resource control (radio resource control, RRC) signaling. The MAC layer signaling includes, for example, a MAC control element (control element, CE). The physical layer signaling includes, for example, downlink control information (downlink control information, DCI).

(7) Reference signal or reference signal (reference signal, RS): In a communication system, to send and receive data, obtain system synchronization and feedback channel information, an uplink channel or a downlink channel needs to be estimated. Channel estimation refers to a process of reconstructing or restoring a received signal to compensate for signal distortion caused by fading caused by channel fading and noise, where changes in time domain and frequency domain of a channel are tracked by using a standard signal predicted by a transmitter machine and a receiver machine. The standard signal is also referred to as a reference signal or an RS. Standard signals are distributed on different resource elements (resource elements, REs) in time-frequency two-dimensional space in an OFDM symbol, and have a known amplitude and phase.

(8) Terms "system" and "network" may be used interchangeably in embodiments of this application. "At least one" means one or more, and "a plurality of" means two or more. "And/or" describes an association relationship of associated objects, and indicates that three relationships may exist. For example, A and/or B may indicate the following three cases: Only A exists, both A and B exist, and only B exists, where A and B may be singular or plural. The character "/" generally indicates an "or" relationship between the associated objects. "At least one of the following items (pieces)" or a similar expression thereof indicates any combination of these items, including a single item (piece) or any combination of a plurality of items (pieces). For example, "at least one of A, B, and C" includes A, B, C, AB, AC, BC, or ABC. In addition, unless otherwise specified, ordinal numbers such as "first" and "second" in embodiments of this application are used to distinguish between a plurality of objects, and are not used to limit a sequence, a time sequence, a priority, or importance of the plurality of objects.

(9) "Sending" and "receiving" in embodiments of this application represent signal transfer directions. For example, "sending information to a device X" may be understood as that a target end of the information is the device X, and may include direct sending through an air interface, or include indirect sending through an air interface by another unit or module. "Receiving information from a device Y" may be understood as that a source end of the information is the device Y, and may include direct receiving from the device Y through an air interface, or include indirect receiving from the device Y from another unit or module through an air interface. "Sending" may alternatively be understood as "outputting" of a chip interface, and "receiving" may alternatively be understood as "inputting" of the chip interface.

This application may be applied to a long term evolution (long term evolution, LTE) system, a new radio (new radio, NR) system, or another communication system. The communication system includes a network device and a terminal device. The network device is used as a configuration information sending entity, and the terminal device is used as a configuration information receiving entity. Specifically, in the communication system, an entity sends configuration information to another entity, and sends data to the another entity or receives data sent by the another entity. The another entity receives the configuration information, and sends data to the configuration information sending entity based on the configuration information or receives data sent by the configuration information sending entity. This application may be applied to a terminal device in a connected state or an active state (ACTIVE), or may be applied to a terminal device in a non-connected state (INACTIVE) or an idle state (IDLE).

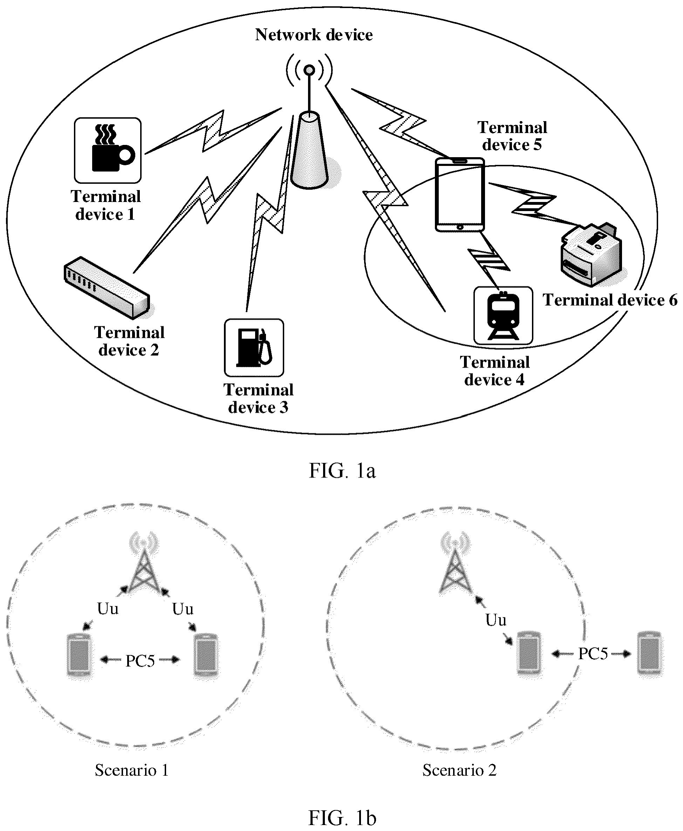

FIG. 1a is a diagram of a communication system according to this application. FIG. 1a shows an example of one network device and six terminal devices. The six terminal devices are a terminal device 1, a terminal device 2, a terminal device 3, a terminal device 4, a terminal device 5, and a terminal device 6. In the example shown in FIG. 1a, an example in which the terminal device 1 is a smart teacup, the terminal device 2 is a smart air conditioner, the terminal device 3 is a smart fuel dispenser, the terminal device 4 is a vehicle, the terminal device 5 is a mobile phone, and the terminal device 6 is a printer is used for description. A transmitter may be a network device or a terminal device, and a receiver may be a network device or a terminal device.

As shown in FIG. 1a, in a communication process, the transmitter (or referred to as a transmitter or a transmitter device) may be a network device, and the receiver (or referred to as a receiver or a receiver device) may be a terminal device (for example, the terminal device 1 to the terminal device 6 in FIG. 1a); the transmitter may be a terminal device, and the receiver may be a network device; both the transmitter and the receiver may be network devices; or both the transmitter and the receiver may be terminal devices.

This application may be applied to a process of communication between the network device and the terminal device, or may be applied to a system in which different terminal devices directly communicate with each other, and is applicable to a communication scenario with network coverage and a communication scenario without network coverage. That is, different terminal devices may be within coverage of the network device, or may be outside the coverage of the network device.

For example, FIG. 1b is a diagram of a communication system according to this application.

As shown in a scenario 1 in FIG. 1b, in a scenario in which different terminal devices are all within network coverage, a network device may communicate with the terminal device through a Uu interface, and different terminal devices may communicate with each other through a proximity-based services communication 5 (proximity-based services communication 5, PC5) interface.

As shown in a scenario 2 in FIG. 1b, in a scenario in which some terminal devices are within network coverage and some other terminal devices are outside the network coverage, a network device may communicate with the some terminal devices through a Uu interface, and the some terminal devices may communicate with the some other terminal devices through a PC5 interface.

It should be understood that, in the communication scenario in FIG. 1b, in a Uu interface-based communication process, the terminal device is a transmitter and the network device is a receiver, or the network device is a transmitter and the terminal device is a receiver. In a PC5 interface-based communication process, one terminal device is a transmitter, and the other terminal device is a network device. In addition, a name of the foregoing interface (namely, the Uu interface or the PC5 interface) is a name in a current communication system. In a future communication system, the name of the interface may change with evolution of a standard/protocol. This is not limited in this application.

The communication system shown in FIG. 1a or FIG. 1b is used as an example. In a wireless communication process, a signal that is sent by a network device and that is used for carrying data needs to be modulated, and correspondingly, a signal received by a terminal device is a modulated signal. In addition, after receiving the signal, the terminal device usually needs to demodulate the received signal, to obtain the data carried in the signal. Currently, as a key technology in wireless communication, a multiple-input multiple-output (multiple-input multiple-output, MIMO) technology can be used for satisfying a requirement for high-speed transmission. Based on the massive multi-input multi-output technology, the network device can multiplex a same time-frequency resource to send a signal to a plurality of terminal devices, so that the plurality of terminal devices can receive and demodulate respective signals on the same time-frequency resource. In this way, space dimension resources can be used, to improve a capacity and spectral efficiency of the communication system without increasing a system bandwidth.

Generally, in a MIMO system, each transmit antenna port (a virtual antenna port or a physical antenna port) has an independent channel. For example, in an uplink and a downlink, to implement channel quality measurement of a multi-antenna system, a plurality of pilot symbols are defined in an NR system, and each pilot symbol may be sent through one or more antenna ports. These pilot symbols may include a channel quality measurement reference symbol (channel state information reference signal, CSI-RS), a demodulation reference signal (demodulation reference signal, DMRS), and a sounding reference signal (sounding reference signal, SRS). The DMRS is used for assisting demodulation of a PDSCH (Physical Downlink Shared Channel, physical downlink shared channel). The CSI-RS is used for measuring a downlink channel corresponding to a physical antenna port. A receiver machine performs channel estimation on each antenna port that performs sending and that is of the base station, and performs channel quality measurement (channel state information, CSI) feedback by using an estimation result. CSI includes related information such as a channel quality indicator (channel quality indicator, CQI), a precoding indicator (precoding matrix indicator, PMI), a layer indicator (layer indicator, LI), and a rank indicator (rank indicator, RI). However, in a process of uplink channel measurement, the network device estimates an uplink channel by using a received SRS, and may perform frequency selection resource scheduling, power control, timing estimation and modulation/coding scheme order selection, downlink precoding generation in time division duplexing (time division duplexing, TDD), and the like based on the information.

In addition, when there are a large quantity of antenna ports, space domain resources are abundant, and a large quantity of scheduling layers can be supported. However, in this case, an extra channel path is introduced for a large-scale antenna, and a channel signal-to-noise ratio is affected in a multi-user (multi-user, MU) scenario. Consequently, a channel estimation error of the receiver machine increases, thereby affecting MIMO equalization and final spectral efficiency.

In an implementation example of the MIMO system, in the following, a reference signal (denoted as x) sent by the network device includes a first-type reference signal (denoted as $x_{rs1}$) and a second-type reference signal (denoted as $x_{rs2}$). For the terminal device, a received signal r of the terminal device may be represented as:

$$r = HPx + n = H[P_1 \quad P_2]\begin{bmatrix}x_{rs1}\\x_{rs2}\end{bmatrix} + n = [HP_1 \quad HP_2]\begin{bmatrix}x_{rs1}\\x_{rs2}\end{bmatrix} + n$$

H is a channel matrix of the terminal device (where a dimension is nRX × nTX, nRX represents a quantity of receive antennas of the terminal device, nTX represents a quantity of transmit antennas of the network device, and nRX ≤ nTX); x represents a reference signal sent by the network device (which may be understood as a sequence carried by the signal); and n represents noise (where a dimension is nRX × 1).

In addition, $P_1$ represents a precoding matrix (where a dimension is nTX × L, and L represents a quantity of layers scheduled by the terminal device) of a first-type reference signal port; $x_{rs1}$ represents a reference signal (where a dimension is L × 1) whose transmission is performed on the first-type reference signal port; $P_2$ represents a precoding matrix (where a dimension is nTX × L', and L' represents a quantity of layers scheduled by another terminal device) of a second-type reference signal port; and $x_{rs2}$ represents a reference signal (where a dimension is L' × 1) whose transmission is performed on a second reference signal port.

In addition, matrix decomposition of the channel matrix of the terminal device is as follows:

$$H = U_0 S_0 V_0^H = U_0 \begin{bmatrix} S & 0 \\ 0 & S' \end{bmatrix} V_0^H = [U \quad U'] \begin{bmatrix} S & 0 \\ 0 & S' \end{bmatrix} \begin{bmatrix} V^H \\ V'^H \end{bmatrix}$$

where $S_0$ represents a diagonal matrix (where a dimension is $nRX \times nRX$) formed by singular values of the channel matrix H of the terminal device;

$U_0$ represents a matrix (where a dimension is $nRX \times nRX$) formed by a left singular vector of the channel matrix H;

$V_0$ represents a matrix (where a dimension is $nTX \times nRX$) formed by a right singular vector of the channel matrix H, and

$V_0^H$ represents conjugate transpose of $V_0$;

S represents a diagonal matrix (where a dimension is $L \times L$) formed by singular values corresponding to layers used by the terminal device during scheduling;

U represents a matrix (where a dimension is $nRX \times L$) formed by a corresponding left singular vector;

V represents a matrix (where a dimension is $nTX \times L$) formed by a corresponding right singular vector, and $V^H$ represents conjugate transpose of V;

S' represents a diagonal matrix (where a dimension is $(nRX- L) \times (nRX- L)$) formed by singular values corresponding to unscheduled layers of the terminal device;

U' represents a matrix (where a dimension is $nRX \times (nRX- L)$) formed by a corresponding left singular vector; and

V' represents a matrix (where a dimension is $nTX \times (nRX- L)$) formed by a corresponding right singular vector, and $V'^H$ represents conjugate transpose of V'.

Assuming that the first-type reference signal port is used for the terminal device to perform data transmission, the second-type reference signal port is allocated to the another terminal device for data transmission. Without loss of generality, it may be assumed that L = 1 and L' = 1, and eigen zero forcing (eigen zero forcing, EZF) precoding is used for the network device. In this case, a useful channel matrix (including precoding, denoted as $HP_1$) and an interference channel matrix (including precoding, denoted as $HP_2$) of the terminal device are respectively represented as follows:

$$HP_1 = USI + U'S'D_{11};$$

and

$$HP_2 = U'S'D_{12}$$

I represents an identity matrix (where a dimension is $L \times L$); and $D_{11}$ represents an interference item that is of the terminal device and that is to the terminal device, and an expression is as follows:

$$D_{11} = -V'^H V_2 (I_2 - V_2^H VV^H V_2)^{-1} V_2^H V$$

A negative sign included in the foregoing expression represents that in this formula, there is a negative effect on sending of a signal of the formula.

$D_{12}$ represents an interference item that is of another terminal device and that is to the terminal device herein, and an expression is as follows:

$$D_{12} = V'^H V_2 (I_2 - V_2^H VV^H V_2)^{-1}$$

Similar to the matrix V formed by the right singular vector in which a layer scheduled by the terminal device is located, $V_2$ represents a matrix formed by a right singular vector in which a layer scheduled by the another terminal device is located; $I_2$ and represents an identity matrix (where a dimension is determined by the quantity of layers scheduled by the another terminal device).

Based on the foregoing analysis, the received signal r of the terminal device may be represented as:

$$r = HPx + n = HP_1 x_{rs1} + HP_2 x_{rs2} + n = (USI + U'S'D_{11})x_{rs1} + U'S'D_{12}x_{rs2} + n$$

Assuming that power of a transmit sequence of the reference signal is normalized, an input signal-to-noise ratio of the channel estimation (least squares (least squares, LS) and port demultiplexing) is expressed as follows:

$$\text{SNR}_{rs1} = \frac{\|HP_1 x_{rs1}\|_2^2}{\|HP_2 x_{rs2} + n\|_2^2} = \frac{\|HP_1\|_2^2}{\|HP_2\|_2^2 + \sigma^2} = \frac{\|USI + U'S'D_{11}\|_2^2}{\|U'S'D_{12}\|_2^2 + \sigma^2}$$

$\sigma^2$ represents power of noise, and $\|HP_1\|_2^2$ represents performing square of a 2-norm of the matrix on $HP_1$. It can be learned from the foregoing formula that, when the quantity of receive antennas increases and a quantity of scheduled layers basically remains unchanged, rank(S') (that is, a quantity of ranks of the matrix S') increases. Correspondingly, a decrease in $U'S'D_{11}$ causes a decrease in the numerator of the foregoing formula, and an increase in $U'S'D_{12}$ causes an increase in the denominator of the foregoing formula. This causes a decrease in $\text{SNR}_{rs1}$.

In a conventional MIMO scenario, because the terminal device has a small quantity of receive antennas, and a small quantity of layers are allowed to be scheduled, the foregoing problem does not exist or may be ignored (to be specific, when a value of rank(S') is small, impact on $\text{SNR}_{rs1}$ is small or may be ignored). However, in a future MIMO scenario (for example, a massive multiple-input multiple-output (massive multiple-input multiple-output, massive MIMO) scenario in 5G, 6G, or another communication system), a quantity of receive antennas of the terminal device may increase significantly, and a quantity of layers that can be scheduled is large (for example, when channel multipaths are abundant). If only a small quantity of layers are dynamically scheduled, the foregoing problem cannot be ignored (to be specific, when the value of rank(S') is large, the impact on $\text{SNR}_{rs1}$ is large).

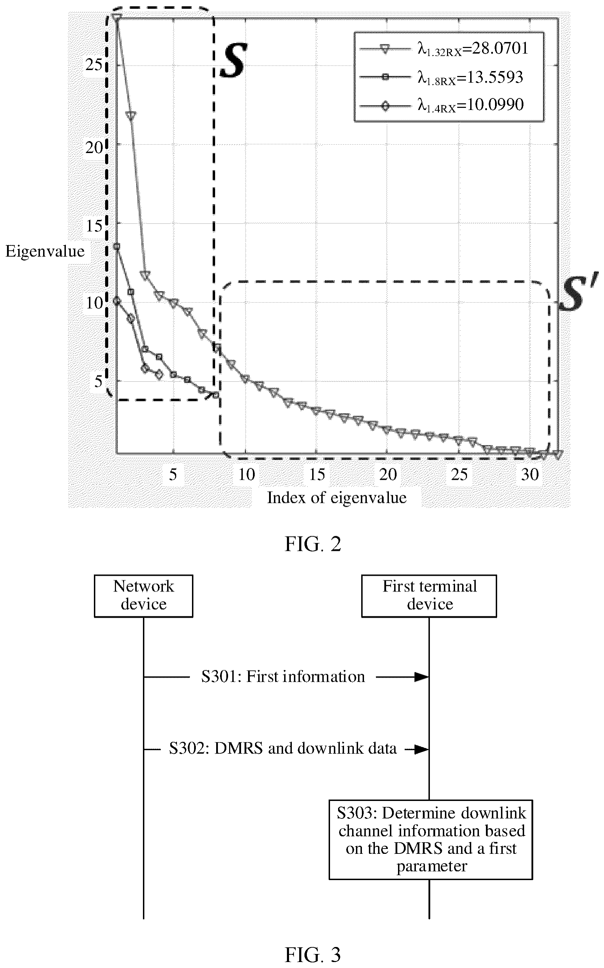

For example, as shown in FIG. 2, a curve with triangles represents channel singular value (eigenvalue) distribution when nRX = 32, a curve with rectangles represents channel singular value distribution when nRX = 8, and a curve with rhombuses represents channel singular value distribution when nRX = 4. In addition, a horizontal coordinate represents a singular value index (index of eigenvalue), and a vertical coordinate represents an absolute value of a singular value. It can be learned from FIG. 2 that, when a quantity of antenna ports of a terminal device changes from 4 to 32 (or from 8 to 32), a quantity of channel singular values increases. If a quantity of scheduled layers is fixed, it can be seen that a quantity of non-zero singular values increases; or if a quantity of scheduled layers basically remains unchanged (as shown in a dashed line box S in the figure), a quantity of unscheduled layers (as shown in a dashed line box S' in the figure) increases as RX increases, and interference generated by a signal of another terminal device causes a sharp decrease in a signal-to-noise ratio.

In conclusion, a terminal device is inevitably interfered with by the signal of the another terminal device in a signal demodulation process. This may cause a signal demodulation failure. Therefore, when signals of a plurality of terminal devices multiplex a same time-frequency resource, how to reduce interference to improve a signal demodulation success rate is an urgent technical problem to be resolved.

To resolve the foregoing problem, this application provides a communication method and a related device, so that in a scenario in which data streams of at least two terminal devices multiplex a same time-frequency resource, a terminal device may determine downlink channel information in the scenario based on an indication of a network device, and demodulate downlink data based on the downlink channel information. This can reduce interference caused by a signal of another terminal device, and improve a signal demodulation success rate. The following provides detailed descriptions with reference to more accompanying drawings.

FIG. 3 is a diagram of an implementation of a communication method according to this application. The method includes the following steps.

It should be noted that in FIG. 3, the method is illustrated by using an example in which a first terminal device and a network device are used as execution bodies of interaction illustration. However, the execution bodies of the interaction illustration are not limited in this application. For example, in FIG. 3 and a corresponding embodiment, S301 to S303 are performed by the first terminal device, may be performed by a chip, a chip system, or a processor that supports the first terminal device in implementing the method, or may be a logic module or software that can implement all or some functions of the first terminal device. In FIG. 3 and the corresponding embodiment, the network device in S301 to S303 may be replaced with a chip, a chip system, or a processor that supports the network device in implementing the method, or may be replaced with a logic module or software that can implement all or some functions of the network device.

S301: The network device sends first information, and correspondingly, the first terminal device receives the first information. The first information is used for determining a first parameter, and the first parameter is used for determining channel information of a channel between the network device and the first terminal device when data streams of at least two terminal devices multiplex a same time-frequency resource.

It may be understood that the network device may communicate with the at least two terminal devices. In a process in which the network device sends downlink data streams (or downlink signals) to the at least two terminal devices, a scenario in which the data streams of the at least two terminal devices multiplex the same time-frequency resource may be understood as a MIMO scenario, a multi-user multiple-input multiple-output (multi-user multiple-input multiple-output, MU-MIMO) scenario, a massive MIMO scenario, or the like. In other words, in the process in which the network device is sending the downlink data streams to the at least two terminal devices on the same time-frequency resource (or before the network device is to send the downlink data streams to the at least two terminal devices on the same time-frequency resource), the network device may send, to the first terminal device, the first information used for determining the first parameter, so that after the terminal device receives the first information and determines the first parameter in step S301, the terminal device can determine, based on the first parameter, downlink channel information and demodulate downlink data (for example, an implementation process of step S303 in the following).

Optionally, the first parameter may be applied to a plurality of frequency domain granularities, for example, a wideband level or a subband level. This is not limited herein.

In a possible implementation, the first information received by the first terminal device in step S301 includes at least one of the following: a layer quantity of a data stream the first terminal device; an index of a matrix that corresponds to the first parameter and that is in a preconfigured matrix set, where the matrix set includes at least two matrices; a left singular vector obtained through matrix decomposition based on the channel information of the channel between the network device and the first terminal device; or the first parameter. Specifically, the first information received by the first terminal device may be implemented by using at least one of the foregoing, so that the first terminal device determines the first parameter in a direct or indirect manner, thereby improving flexibility of implementing the solution.

In an implementation example, when the first information received in step S301 includes the quantity of data streams, the first terminal device may determine a fixed matrix G0 (where elements of the matrix G0 follow Gaussian distribution) in a protocol preconfiguration/standard preconfiguration manner; and rows corresponding to the quantity of data streams included in the first information are extracted from the matrix G0, to form a matrix G, and the first parameter is constructed and denoted as $G^H*G$, where $G^H$ represents conjugate transpose of G.

In another implementation example, when the first information received in step S301 includes the index and the quantity of data streams, the first terminal device determines a matrix G0 from the preconfigured matrix set based on the index; and rows corresponding to the quantity of data streams included in the first information are extracted from the matrix G0, to form a matrix G, and the first parameter is constructed and denoted as $G^H*G$, where $G^H$ represents conjugate transpose of G.

Optionally, the index may be selected by the first terminal device or the network device based on an original channel of the first terminal device. For example, a selection principle is that the index can cause a rank of a matrix $G^H*G*H$ (where H represents the channel information of the first terminal device) to be equal to the layer quantity of the data stream of the first terminal device, and a trace of the matrix $G^H*G*H$ to be the largest (where $G^H$ represents that a conjugate transpose operation is performed on the matrix G, and H in $G*H$ represents the channel information of the first terminal device). In another implementation example, when the first information received by the first terminal device in step S301 includes the left singular vector, it is assumed that the left singular vector is represented as a matrix U, and a dimension is $nRX \times nL$, where nL represents a quantity of left singular vectors (which is equal to the layer quantity of the data stream of the first terminal device); and each element (complex number) of the matrix U is represented in a specific data format (for example, a single-precision floating-point number), overheads are nB bits, and in this case, the network device indicates nRX*nL*nB bits to the UE, and the first terminal device may directly construct the left singular vector based on the received data stream. Optionally, another method includes but is not limited to: performing quantization compression on the data stream, and decompressing the data stream by the first terminal device after receiving the data stream; or first performing transformation (for example, sparse transformation) on the left singular vector, and performing inverse transformation by the first terminal device after receiving the data stream.

Optionally, the left singular vector is from the matrix decomposition of a channel matrix of the first terminal device, the quantity of left singular vectors is equal to the layer quantity of the data stream of the first terminal device, and the left singular vector may be compressed and quantized.

In a possible implementation, a matrix dimension of the matrix corresponding to the first parameter determined by using the first information is equal to a quantity of receive ports of the first terminal device. Specifically, as one of bases for determining the downlink channel information, the matrix dimension of the matrix corresponding to the first parameter is equal to the quantity of receive ports of the first terminal device. For example, the matrix dimension of the matrix corresponding to the first parameter is nRX-by-nRX, where nRX is the quantity of receive ports of the first terminal device. A real-time channel matrix of a to-be-scheduled user needs to be considered for a value of nRX. Specifically, the matrix may be a matrix formed by a left singular vector obtained through matrix decomposition performed on an original channel matrix of the first terminal device, or may be a matrix in an agreed specific matrix set (where matrix elements of the matrix follow specific random distribution). Therefore, the matrix dimension of the parameter for determining the downlink channel information is limited, so that the downlink channel information can adapt to a dimension of the receive antenna port of the first terminal device.

In a possible implementation, in step S303, the downlink data received by the first terminal device and a data stream of another terminal device multiplex a same time-frequency resource. Specifically, the downlink data received by the first terminal device and the data streams of the another terminal device multiplex the same time-frequency resource, so that the foregoing solution can be applied to the scenario in which the data streams of the at least two terminal devices multiplex the same time-frequency resource.

Optionally, when the downlink data received by the first terminal device and the data streams of the another terminal device do not multiplex the same time-frequency resource, the first terminal device may alternatively determine the downlink channel information by using the first parameter, and correctly demodulate the downlink data based on the determined downlink channel information. In other words, whether a scenario in which data streams of a plurality of terminal devices multiplex a same time-frequency resource for transmission exists is not limited in the foregoing technical solution. To be specific, regardless of whether the downlink data received by the first terminal device and the data streams of the another terminal device multiplex the same time-frequency resource, the downlink channel information may be determined based on the first parameter, and the downlink data may be correctly demodulated.

In a possible implementation, a rank (rank) of the matrix corresponding to the first parameter determined by using the first information is greater than or equal to the layer quantity of the data stream of the first terminal device. The layer quantity of the data stream of the first terminal device is a scalar (where for example, a value of the scalar is a TOP layer scheduled by the first terminal device, which indicates that singular values of the channel matrix of the first terminal device are sorted in descending order, and a part of singular values which are larger are selected for scheduling), or a value of the layer quantity of the data stream of the first terminal device is a value of a layer sequence number of the data stream of the first terminal device in the data streams of the at least two terminal devices. Specifically, as one of the bases for determining the downlink channel information, the rank of the matrix corresponding to the first parameter is greater than or equal to the layer quantity of the data stream of the first terminal device. Therefore, the rank of the matrix of the parameter for determining the downlink channel information is limited, so that the downlink channel information can adapt to a quantity of real-time scheduled layers of the first terminal device, to avoid interference caused by a signal of the another terminal device.

In a possible implementation, the value of the scalar of the layer quantity of the data stream of the first terminal device or a value of a vector dimension of the data stream of the first terminal device satisfies at least one of the following: not less than the quantity of real-time scheduled layers of the first terminal device, not greater than a quantity of channel multipaths or a rank of a channel matrix of the first terminal device, or not less than a quantity of multiplexed ports of a demodulation reference signal sending port. Specifically, the value of the scalar of the quantity of data streams of the downlink data of the first terminal device or the value of the vector dimension satisfies the at least one of the foregoing, and a plurality of implementations for the data streams of the downlink data are provided.

S302: The network device sends a DMRS and the downlink data, and correspondingly, the first terminal device receives the DMRS and the downlink data.

S303: The first terminal device determines the downlink channel information based on the DMRS and the first parameter. The downlink channel information is used for demodulating the downlink data.

In an implementation example, in step S303, a process in which the first terminal device performs channel estimation based on the first parameter satisfies the following:

$$\widehat{H}_{RS,LS} = f_{LS}(C \cdot r_{RS}) \approx HP_{MU}$$

$f_{LS}(\cdot)$ represents actual channel estimation, $\widehat{H}_{RS,LS}$ represents an estimation result of a downlink channel (that is, the downlink channel information in step S303, where the network device sends the DMRS and the downlink data based on $HP_{MU}$ in step S302, a result of downlink channel estimation performed by the first terminal device based on $f_{LS}(C \cdot r_{RS})$ is represented as $\widehat{H}_{RS,LS}$, and an approximate equal sign "≈" is used in the foregoing formula because inevitable energy loss may occur during signal transmission), $r_{RS}$ represents a received reference signal (namely, the DMRS), C represents the first parameter, H represents the channel matrix, and $P_{MU}$ represents a precoding matrix in the scenario in which the data streams of the at least two terminal devices multiplex the same time-frequency resource.

The following formula may be obtained:

$$r_{RS} = C \cdot HP_{MU}x_{RS} + n$$

n represents noise, and $x_{RS}$ represents a sequence carried by the DMRS.

In addition, matrix decomposition of the channel matrix H is represented as:

$$H = U_0 S_0 V_0^H$$

Similar to the foregoing, $U_0$, $S_0$, and $V_0$ are respectively a matrix formed by a corresponding left singular vector, a diagonal matrix formed by corresponding singular values, and a matrix formed by a corresponding right singular vector.

Optionally, the first parameter C may be implemented in the following plurality of manners.

For example, the first parameter C may be implemented in a closed-loop feedback manner. $C_{ideal}$ represents a first parameter in the "closed-loop feedback" manner, and satisfies the following:

$$C_{ideal} = \alpha \cdot U_0 \begin{bmatrix} I_{N_{port}} & 0 \\ 0 & 0 \end{bmatrix} U_0^H \in \mathbb{C}^{Nrx \times Nrx}$$

$\alpha$ is a scaling coefficient, $I_{N_{port}}$ represents an identity matrix whose dimension is $N_{port} \times N_{port}$, $N_{port}$ represents a weighted quantity of receive ports that is selected based on a quantity of scheduled layers, "$\in \mathbb{C}^{Nrx \times Nrx}$" represents that a matrix dimension is Nrx $\times$ Nrx, Nrx represents a quantity of receive ports of the first terminal device, and $\mathbb{C}$ represents that an element of the matrix is a complex number.

Optionally, the scaling coefficient $\alpha$ satisfies:

$$\alpha = \frac{\|S_0\|_2}{\|S_0(1 : N_{port}, 1 : N_{port})\|_2}$$

$\|S_0\|_2$ represents a 2-norm of the matrix $S_0$, $\|S_0(1 : N_{port}, 1 : N_{port})\|_2$ represents a 2-norm of the matrix $S_0(1 : N_{port}, 1 : N_{port})$, "1 : $N_{port}$" in $S_0(1 : N_{port}, 1 : N_{port})$ represents that the 1st row to the $N_{port}$th row in the matrix $S_0$ and the 1st column to the $N_{port}$th column in the matrix $S_0$ are selected, and $N_{port}$ represents the weighted quantity of receive ports that is selected based on the quantity of scheduled layers.

For another example, the first parameter C may be implemented in an open-loop feedback manner. $C_{sub-optimal}$ represents a first parameter in the "open-loop feedback" manner, and satisfies the following:

$$C_{sub-optimal} = \beta \cdot G^H G \in \mathbb{C}^{Nrx \times Nrx}, \ G = [g_{ij}] \in \mathbb{C}^{Nport \times Nrx}$$

$\beta$ is a coefficient, so that a trace of $\beta \cdot G^H G$ is 1, the matrix G is a complex Gaussian random matrix, "$\in \mathbb{C}^{Nport \times Nrx}$" represents a dimension of the matrix G is Nport $\times$ Nrx, $N_{port}$ represents the weighted quantity of receive ports that is selected based on the quantity of scheduled layers, and Nrx is the quantity of receive ports of the first terminal device.

Optionally, a real part of elements of the matrix G satisfies normal distribution, and may be denoted as:

$$real(g_{ij}) \sim N(0,1)$$

Optionally, an imaginary part of elements of the matrix G satisfies normal distribution, and may be denoted as:

$$imag(g_{ij}) \sim N(0,1)$$

In an implementation example, the first parameter may be determined by using a plurality of parameters, for example, $\{L_{ue}, U_{ue}\}$, where the parameter $L_{ue}$ represents a quantity of aggregated multipaths/a quantity of aggregated layers, and is a scalar; and the parameter $U_{ue}$ represents a right singular matrix of the channel matrix of the first terminal device, and is a square matrix whose dimension is Nrx. It should be understood that the braces in $\{L_{ue}, U_{ue}\}$ represent a set. That is, the first information includes the plurality of parameters. $\{L_{ue}, U_{ue}\}$ provided herein is an example of the first information. In the example, the first information includes the following two parts: (1) the quantity $L_{ue}$ of data streams of the first terminal device; and (2) the left singular vector obtained through matrix decomposition based on the channel information of the channel between the network device and the first terminal device.

In addition, the first parameter $C_{ue}$ may be represented as:

$$C_{ue} = \mathcal{F}\{L_{ue}, U_{ue}\}$$

The parameter $\mathcal{F}\{\cdot\}$ is a method for constructing a weighting parameter (a channel aggregation matrix). For example, the first parameter $C_{ue}$ may be represented as:

$$C_{ue} = \alpha_{ue} \cdot U_{ue} \cdot \begin{bmatrix} I_{L_{ue}} & 0 \\ 0 & 0 \end{bmatrix} \cdot U_{ue}^{H}$$

In another implementation example, the first parameter may be determined by using a plurality of parameters, for example, $\{L_{ue}, I_{G_{ue}}\}$, where the parameter $L_{ue}$ represents a quantity of aggregated multipaths/a quantity of aggregated layers, and is a scalar; and the parameter $I_{G_{ue}}$ represents an index indicated by the network device by using the first information.

In addition, the first parameter $C_{ue}$ may be represented as:

$$C_{ue} = \mathcal{G}\{L_{ue}, I_{G_{ue}}\} = \beta_{ue} \cdot G_{ue}^{H} \cdot G_{ue}$$

The parameter $\mathcal{G}\{\cdot\}$ is a method for constructing a channel aggregation matrix by using random distribution.

Elements of the parameter $G_{ue}$ follow the random distribution (for example, complex Gaussian distribution), and a dimension is $L_{ue} \times Nrx$.

The parameter $\beta_{ue}$ ensures that a trace of the covariance matrix $G_{ue}^{H} \cdot G_{ue}$ is 1.

Based on the technical solution shown in FIG. 3, the first terminal device may determine the first parameter based on the first information received in step S302, and the first terminal device may subsequently obtain, based on the first parameter in step S303, the downlink channel information used for demodulating the downlink data. The first parameter is used for determining the channel information of the channel between the network device and the first terminal device when the data streams of the at least two terminal devices multiplex the same time-frequency resource. Therefore, in the scenario in which the data streams of the at least two terminal devices multiplex the same time-frequency resource, the first terminal device may determine the downlink channel information in the scenario based on an indication of the network device, and demodulate the downlink data based on the downlink channel information. This can reduce the interference caused by the signal of the another terminal device, and improve a signal demodulation success rate.

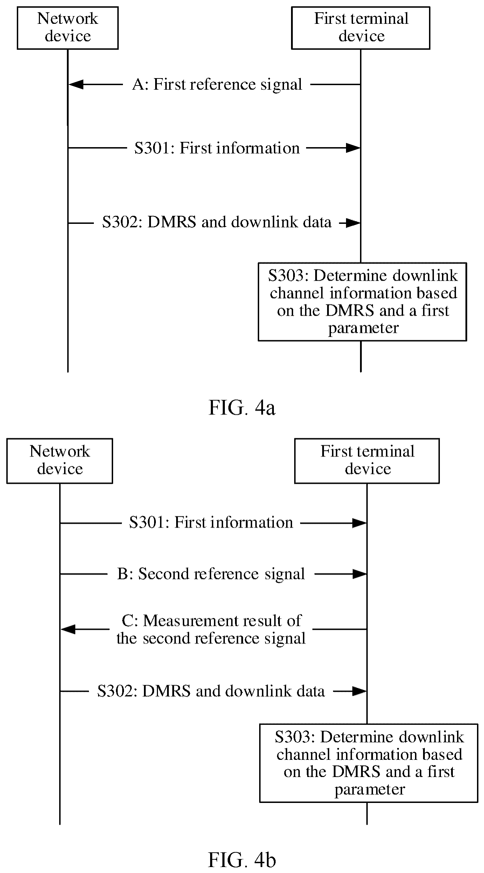

In a possible implementation, as shown in FIG. 4a, before a first terminal device receives first information in step S301, the method further includes: step A: The first terminal device sends a first reference signal, where the first reference signal is used for determining a first parameter. Specifically, before the first terminal device receives the first information, the first terminal device may further send the first reference signal, so that a network device determines the first parameter based on uplink channel information indicated by the first reference signal. The first reference signal sent by the first terminal device is an uplink reference signal, so that the network device may obtain the uplink channel information by using the uplink reference signal and determine the first parameter.

In a possible implementation, a DMRS and downlink data are obtained by performing precoding based on the first parameter. Specifically, because the first terminal device needs to use the first parameter as one of bases for determining downlink channel information, the DMRS and the downlink data sent by the network device are obtained by performing precoding based on the first parameter, so that the first terminal device may obtain more accurate downlink channel information, to improve a success rate of subsequent demodulation based on the downlink channel information.

In an implementation example, in the method shown in FIG. 4a, after the network device receives the first reference signal in step A, the network device may obtain a channel matrix based on the first reference signal, and the channel matrix $H_{ue}$ may be represented as:

$$H_{ue} \in \mathbb{C}^{Nrx \times Nrx}$$

$\mathbb{C}^{Nrx \times Nrx}$ represents a matrix dimension of $H_{ue}$ is $Nrx \times Nrx$.

Correspondingly, the network device may perform matrix decomposition on the channel matrix $H_{ue}$ to obtain:

$$H_{ue} = U_{ue} * S * V^{H}, \quad U_{ue} \in \mathbb{C}^{Nrx \times Nrx}$$

$U_{ue}$ represents a matrix formed by a left singular vector of the channel matrix H, S represents a diagonal matrix formed by singular values corresponding to layers used by the first terminal device during scheduling, V represents a matrix formed by a corresponding right singular vector, and $V^{H}$ represents conjugate transpose of V.

Then, the network device may determine the first parameter based on the channel matrix, and send, in step S301, the first information indicating the first parameter. For example, the first parameter may be represented as $C_{ue} = \mathcal{F}\{L_{ue},$ $U_{ue}\}$, or the first parameter may be represented as $C_{ue} = \mathcal{G}\{L_{ue}, I_{Gue}\}$. For specific implementation, refer to the foregoing descriptions. Then, the network device may determine precoding information P based on the first parameter, and the precoding information P may be represented as:

$$P = \mathcal{P}_{ezf}\{C_{ue1} * H_{ue1}, C_{ue2} * H_{ue2}, \ldots, C_{ueN} * H_{ueN}\}$$

$\mathcal{P}_{ezf}\{\cdot\}$ represents a precoding manner. For example, a precoding manner in a multi-user (multi-user, MU) scenario may be EZF precoding. For another example, zero forcing (zero forcing, ZF) precoding is used in a single-user (single-user, SU) scenario. $C_{ue1}, C_{ue2}, \ldots,) C_{ueN}$ represents first parameters respectively corresponding to N (where N is a positive integer) terminal devices (where for example, the N terminal devices may be the foregoing at least two terminal devices, that is, the N terminal devices include the first terminal device), and $H_{ue1}, H_{ue2}, \ldots, H_{ueN}$ represents channel matrices respectively corresponding to the N terminal devices.

In step S302, after the network device precodes the DMRS and the downlink data based on the precoding information P, a received signal of the first terminal device is denoted as $H_{ue} * P$. Then, in step S303, the downlink channel information $\widetilde{H_{ue}}$ obtained by the first terminal device by performing channel estimation based on the DMRS and the first parameter is represented as:

$$\widetilde{H_{ue}} = C_{ue} * H_{ue} * P$$

Further, the first terminal device may demodulate the downlink data based on the downlink channel information $\widetilde{H_{ue}}$. In this solution, a channel estimation effect can be improved, to improve spectral efficiency of a MIMO system.

In a possible implementation, as shown in FIG. 4b, after a first terminal device receives first information in step S301, the method further includes: step B: The first terminal device receives a second reference signal, where the second reference signal is generated based on a first parameter; and step C: The first terminal device sends a measurement result of the second reference signal, where the measurement result of the second reference signal is used for determining precoding information of a DMRS and downlink data. Specifically, after the first terminal device receives the first information, the first terminal device may further receive the second reference signal generated based on the first parameter, and send the measurement result of the second reference signal, so that a network device may subsequently determine the precoding information of the DMRS and the downlink data based on the measurement result of the second reference signal. The second reference signal is a downlink reference signal, so that the network device may determine the precoding information of the DMRS and the downlink data by using channel information indicated by the measurement result of the downlink reference signal by the first terminal device.

In an implementation example, in the method shown in FIG. 4b, the network device sends, in step S301, the first information indicating the first parameter. For example, the first parameter may be represented as $C_{ue} = \{L_{ue}, U_{ue}\}$, or the first parameter may be represented as $C_{ue} = \mathcal{G}\{L_{ue}, I_{Gue}\}$. For specific implementation, refer to the foregoing descriptions.

Then, the network device sends the second reference signal in step B. After the second reference signal is transmitted through an air interface, the first terminal device may perform channel estimation based on the received second reference signal, and the obtained channel information $\widetilde{H_{ue}}$ may be represented as:

$$\widetilde{H_{ue}} = C_{ue} * H_{ue}$$

$H_{ue}$ represents the channel information of the transmitted second reference signal.

In addition, the first terminal device performs matrix decomposition on $\widetilde{H_{ue}}$ to obtain a matrix $\widetilde{V_{ue}}$ formed by a right singular vector. Correspondingly, the measurement result that is of the second reference signal and that may be fed back by the first terminal device in step C may indicate the matrix $\widetilde{V_{ue}}$. Then, the network device may determine the precoding information P based on matrices $\widetilde{V_{ue}}$ fed back by one or more terminal devices, and the precoding information P may be represented as:

$$P = P_{ezf}\{\widetilde{V_{ue1}}, \widetilde{V_{ue2}}, \ldots, \widetilde{V_{ueN}}\}$$

$P_{ezf}\{\cdot\}$ represents a precoding manner. For example, a precoding manner in a multi-user (multi-user, MU) scenario may be EZF precoding. For another example, zero forcing (zero forcing, ZF) precoding is used in a single-user (single-user, SU) scenario. $\widetilde{V_{ue1}}, \widetilde{V_{ue2}}, \ldots, \widetilde{V_{ueN}}$ represents matrices respectively fed back by N (N is a positive integer) terminal devices.

In step S302, after the network device precodes the DMRS and the downlink data based on the precoding information P, a received signal of the first terminal device is denoted as $H_{ue}*P$. Then, in step S303, the first terminal device may perform channel estimation based on the DMRS and the first parameter, to obtain downlink channel information $\widetilde{H_{ue}}$. Further, the first terminal device may demodulate the downlink data based on the downlink channel information $\widetilde{H_{ue}}$. In this solution, a channel estimation effect can be improved, to improve spectral efficiency of a MIMO system.

In a possible implementation, as shown in FIG. 4b, after a first terminal device receives first information in step S301, the method further includes: step D: The first terminal device sends a third reference signal, where the third reference signal is generated based on a first parameter, and the third reference signal is used for determining precoding information of a DMRS and downlink data. Specifically, after the first terminal device receives the first information, the first terminal device may further send the third reference signal generated based on the first parameter, so that a network device may subsequently determine the precoding information of the DMRS and the downlink data based on the third reference signal. The third reference signal is an uplink reference signal, so that the network device may determine the precoding information of the DMRS and the downlink data by using channel information indicated by the uplink reference signal sent by the first terminal device.

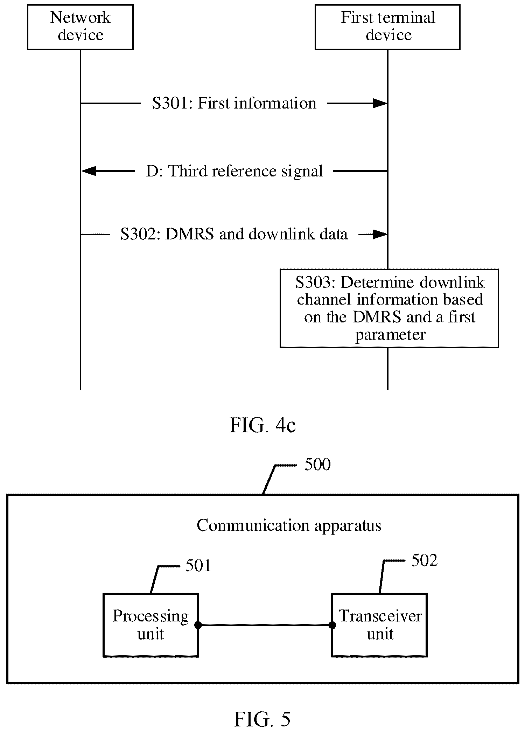

In an implementation example, in the method shown in FIG. 4c, the network device sends, in step S301, the first information indicating the first parameter. For example, the first parameter may be represented as $C_{ue} = \{L_{ue}, U_{ue}\}$, or the first parameter may be represented as $C_{ue} = \mathcal{G}\{L_{ue}, I_{G_{ue}}\}$. For specific implementation, refer to the foregoing descriptions.

Then, the first terminal device sends the third reference signal based on the first parameter in step D. After the third reference signal is transmitted through an air interface, the network device may perform channel estimation based on the received third reference signal, and the obtained channel information $\widetilde{H_{ue}}$ may be represented as:

$$\widetilde{H_{ue}} = C_{ue}*H_{ue}$$

$H_{ue}$ represents the channel information of the transmitted third reference signal.

In addition, the network device performs matrix decomposition on $\widetilde{H_{ue}}$ to obtain a matrix $\widetilde{V_{ue}}$ formed by a right singular vector. Then, the network device may determine the precoding information P based on matrices $\widetilde{V_{ue}}$ fed back by one or more terminal devices, and the precoding information P may be represented as:

$$P = P_{ezf}\{\widetilde{V_{ue1}}, \widetilde{V_{ue2}}, \ldots, \widetilde{V_{ueN}}\}$$

$P_{ezf}\{\cdot\}$ represents a precoding manner. For example, a precoding manner in a multi-user (multi-user, MU) scenario may be EZF precoding. For another example, zero forcing (zero forcing, ZF) precoding is used in a single-user (single-user, SU) scenario. $\widetilde{V_{ue1}}, \widetilde{V_{ue2}}, \ldots, \widetilde{V_{ueN}}$ represents matrices respectively fed back by N (N is a positive integer) terminal devices.

In step S302, after the network device precodes the DMRS and the downlink data based on the precoding information P, a received signal of the first terminal device is denoted as $H_{ue}*P$. Then, in step S303, the first terminal device may perform channel estimation based on the DMRS and the first parameter, to obtain downlink channel information $\widetilde{H_{ue}}$. Further, the first terminal device may demodulate the downlink data based on the downlink channel information $\widetilde{H_{ue}}$. In this solution, a channel estimation effect can be improved, to improve spectral efficiency of a MIMO system.

Refer to FIG. 5. An embodiment of this application provides a communication apparatus 500. The communication apparatus 500 can implement a function of the first terminal device (or the network device) in the foregoing method embodiments, and therefore can also achieve beneficial effects of the foregoing method embodiments. In this embodiment of this application, the communication apparatus 500 may be the first terminal device (or the network device), or may be an integrated circuit, an element, or the like, for example, a chip, inside the first terminal device (or the network device). In the following embodiments, an example in which the communication apparatus 500 is the first terminal device (or the network device) is used for description.

In a possible implementation, when the apparatus 500 is configured to perform the method performed by the first terminal device in any one of the foregoing embodiments, the apparatus 500 includes a processing unit 501 and a transceiver unit 502. The transceiver unit 502 is configured to receive first information, where the first information is used for determining a first parameter, the first parameter is used for determining channel information of a channel between a network device and the first terminal device when data streams of at least two terminal devices multiplex a same time-frequency resource, and the at least two terminal devices include the first terminal device. The transceiver unit 502 is further configured to receive a demodulation reference signal DMRS and downlink data. The processing unit 501 is configured to determine downlink channel information based on the DMRS and the first parameter, where the downlink channel information is used for demodulating the downlink data.

In a possible implementation, the first information includes at least one of the following: a layer quantity of a data stream the first terminal device; an index of a matrix that corresponds to the first parameter and that is in a preconfigured matrix set, where the matrix set includes at least two matrices; a left singular vector obtained through matrix decomposition based on the channel information of the channel between the network device and the first terminal device; or the first parameter.

In a possible implementation, a matrix dimension of the matrix corresponding to the first parameter is equal to a quantity of receive ports of the first terminal device.

In a possible implementation, the downlink data and a data stream of another terminal device multiplex a same time-frequency resource.

In a possible implementation, a rank of the matrix corresponding to the first parameter is greater than or equal to the layer quantity of the data stream of the first terminal device; and the layer quantity of the data stream of the first terminal device is a scalar, or a value of the layer quantity of the data stream of the first terminal device is a value of a layer sequence number of the data stream of the first terminal device in the data streams of the at least two terminal devices.

In a possible implementation, a value of the scalar of the layer quantity of the data stream of the first terminal device or a value of a vector dimension of the data stream of the first terminal device satisfies at least one of the following: not less than a quantity of real-time scheduled layers of the first terminal device, not greater than a quantity of channel multipaths or a rank of a channel matrix of the first terminal device, or not less than a quantity of multiplexed ports of a demodulation reference signal sending port.

In a possible implementation, the transceiver unit 502 is further configured to send a first reference signal, where the first reference signal is used for determining the first parameter.

In a possible implementation, the DMRS and the downlink data are obtained by performing precoding based on the first parameter.

In a possible implementation, the transceiver unit 502 is further configured to receive a second reference signal, where the second reference signal is generated based on the first parameter; and the transceiver unit 502 is further configured to send a measurement result of the second reference signal, where the measurement result of the second reference signal is used for determining precoding information of the DMRS and the downlink data.

In a possible implementation, the transceiver unit 502 is further configured to send a third reference signal, where the third reference signal is generated based on the first parameter, and the third reference signal is used for determining the precoding information of the DMRS and the downlink data.

In a possible implementation, when the apparatus 500 is configured to perform the method performed by the network device in any one of the foregoing embodiments, the apparatus 500 includes a processing unit 501 and a transceiver unit 502. The transceiver unit 502 is configured to determine first information, a demodulation reference signal DMRS, and downlink data. The transceiver unit 502 is configured to send the first information, where the first information is used for determining a first parameter, the first parameter is used for determining channel information of a channel between the network device and a first terminal device when data streams of at least two terminal devices multiplex a same time-frequency resource, and the at least two terminal devices include the first terminal device. The transceiver unit 502 is further configured to send the DMRS and the downlink data, where the DMRS and the first parameter are used for determining downlink channel information, and the downlink channel information is used for demodulating the downlink data.

In a possible implementation, the first information includes at least one of the following: a layer quantity of a data stream the first terminal device; an index of a matrix that corresponds to the first parameter and that is in a preconfigured matrix set, where the matrix set includes at least two matrices; a left singular vector obtained through matrix decomposition based on the channel information of the channel between the network device and the first terminal device; or the first parameter.

In a possible implementation, a matrix dimension of the matrix corresponding to the first parameter is equal to a quantity of receive ports of the first terminal device.

In a possible implementation, the downlink data and a data stream of another terminal device multiplex a same time-frequency resource.

In a possible implementation, a rank of the matrix corresponding to the first parameter is greater than or equal to the layer quantity of the data stream of the first terminal device; and the layer quantity of the data stream of the first terminal device is a scalar, or a value of the layer quantity of the data stream of the first terminal device is a value of a layer sequence number of the data stream of the first terminal device in the data streams of the at least two terminal devices.

In a possible implementation, a value of the scalar of the layer quantity of the data stream of the first terminal device or a value of a vector dimension of the data stream of the first terminal device satisfies at least one of the following: not less than a quantity of real-time scheduled layers of the first terminal device, not greater than a quantity of channel multipaths or a rank of a channel matrix of the first terminal device, or not less than a quantity of multiplexed ports of a demodulation reference signal sending port.

In a possible implementation, the transceiver unit 502 is further configured to receive a first reference signal, where the first reference signal is used for determining the first parameter.

In a possible implementation, the DMRS and the downlink data are obtained by performing precoding based on the first parameter.

In a possible implementation, the transceiver unit 502 is further configured to send a second reference signal, where the second reference signal is generated based on the first parameter; and the transceiver unit 502 is further configured to receive a measurement result of the second reference signal, where the measurement result of the second reference signal is used for determining precoding information of the DMRS and the downlink data.

In a possible implementation, the transceiver unit 502 is further configured to receive a third reference signal, where the third reference signal is generated based on the first parameter, and the third reference signal is used for determining the precoding information of the DMRS and the downlink data.

It should be noted that for specific content such as an information execution process of the units of the communication apparatus 500, refer to descriptions in the foregoing method embodiments of this application. Details are not described herein again.

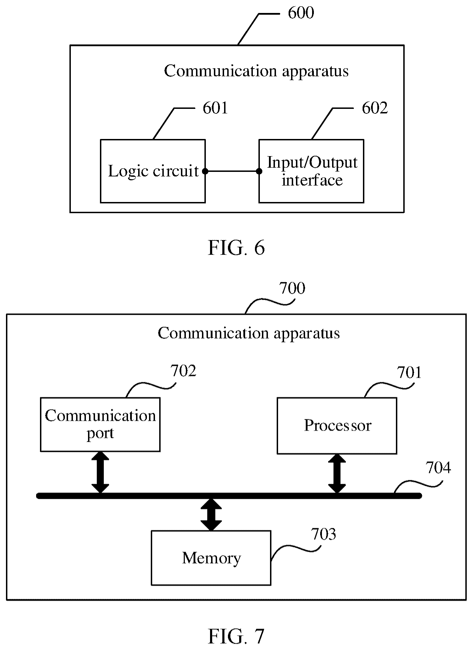

FIG. 6 is another diagram of a structure of a communication apparatus 600 according to this application, and the communication apparatus 600 includes at least an input/output interface 602. The communication apparatus 600 may be a chip or an integrated circuit.

Optionally, the communication apparatus further includes a logic circuit 601.

The transceiver unit 502 shown in FIG. 5 may be a communication interface. The communication interface may be the input/output interface 602 in FIG. 6. The input/output interface 602 may include an input interface and an output interface. Alternatively, the communication interface may be a transceiver circuit, and the transceiver circuit may include an input interface circuit and an output interface circuit.

Optionally, the input/output interface 602 is configured to receive first information, where the first information is used for determining a first parameter, the first parameter is used for determining channel information of a channel between a network device and a first terminal device when data streams of at least two terminal devices multiplex a same time-frequency resource, and the at least two terminal devices include the first terminal device. The input/output interface 602 is further configured to receive a demodulation reference signal DMRS and downlink data. The logic circuit 601 is configured to determine downlink channel information based on the DMRS and the first parameter, where the downlink channel information is used for demodulating the downlink data.

The logic circuit 601 and the input/output interface 602 may further perform other steps performed by the first terminal device in any one of embodiments, and achieve corresponding beneficial effects. Details are not described herein again.

Optionally, the logic circuit 601 is configured to determine first information, a demodulation reference signal DMRS, and downlink data. The input/output interface 602 is configured to send the first information, where the first information is used for determining a first parameter, the first parameter is used for determining channel information of a channel between a network device and a first terminal device when data streams of at least two terminal devices multiplex a same time-frequency resource, and the at least two terminal devices include the first terminal device. The input/output interface 602 is further configured to send the DMRS and the downlink data, where the DMRS and the first parameter are used for determining downlink channel information, and the downlink channel information is used for demodulating the downlink data.

The logic circuit 601 and the input/output interface 602 may further perform other steps performed by the network device in any one of embodiments, and achieve corresponding beneficial effects. Details are not described herein again.

In a possible implementation, the processing unit 501 shown in FIG. 5 may be the logic circuit 601 in FIG. 6.

Optionally, the logic circuit 601 may be a processing apparatus, and some or all functions of the processing apparatus may be implemented by software. The some or all functions of the processing apparatus may be implemented by software.

Optionally, the processing apparatus may include a memory and a processor. The memory is configured to store a computer program, and the processor reads and executes the computer program stored in the memory, to perform corresponding processing and/or steps in any method embodiment.

Optionally, the processing apparatus may include only the processor. The memory configured to store the computer program is located outside the processing apparatus, and the processor is connected to the memory through a circuit/wire, to read and execute the computer program stored in the memory. The memory and the processor may be integrated together, or may be physically independent of each other.

Optionally, the processing apparatus may be one or more chips or one or more integrated circuits. For example, the processing apparatus may be one or more field-programmable gate arrays (field-programmable gate arrays, FPGAs), application-specific integrated circuits (application-specific integrated circuits, ASICs), system on chips (system on chips, SoCs), central processing units (central processing units, CPUs), network processors (network processors, NPs), digital signal processors (digital signal processors, DSPs), microcontroller units (microcontroller units, MCUs), programmable logic devices (programmable logic devices, PLDs), other integrated chips, any combination of the foregoing chips or processors, or the like.

FIG. 7 is a diagram of a possible logical structure of a communication apparatus 700 in the foregoing embodiments according to an embodiment of this application. The communication apparatus may be specifically the first terminal device in the foregoing embodiments. The communication apparatus 700 may include but is not limited to at least one processor 701 and a communication port 702. Further, optionally, the apparatus may further include at least one of a memory 703 and a bus 704. In this embodiment of this application, the at least one processor 701 is configured to perform control processing on an action of the communication apparatus 700.

In addition, the processor 701 may be a central processing unit, a general-purpose processor, a digital signal processor, an application-specific integrated circuit, a field programmable gate array or another programmable logic device, a transistor logic device, a hardware component, or any combination thereof. The processor 701 may implement or execute various example logical blocks, modules, and circuits described with reference to content disclosed in this application. Alternatively, the processor may be a combination of processors implementing a computing function, for example, a combination of one or more microprocessors, or a combination of a digital signal processor and a microprocessor. It may be clearly understood by a person skilled in the art that, for the purpose of convenient and brief description, for a detailed working process of the foregoing system, apparatus, and unit, refer to a corresponding process in the foregoing method embodiments, and details are not described herein again.

It should be noted that the communication apparatus shown in FIG. 7 may be specifically configured to implement other steps implemented by the first terminal device in the foregoing corresponding method embodiments, and implement technical effects corresponding to the first terminal device. For a specific implementation of the communication apparatus shown in FIG. 7, refer to the descriptions in the foregoing method embodiments. Details are not described herein again.

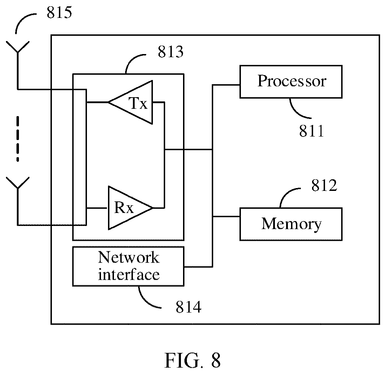

FIG. 8 is a diagram of a structure of a communication apparatus in the foregoing embodiments according to an embodiment of this application. The communication apparatus may be specifically the network device in the foregoing embodiments. For a structure of the communication apparatus, refer to the structure shown in FIG. 8.

The communication apparatus includes at least one processor 811 and at least one network interface 814. Further, optionally, the communication apparatus further includes at least one memory 812, at least one transceiver 813, and one or more antennas 815. The processor 811, the memory 812, and the transceiver 813 are connected to the network interface 814, for example, through a bus. In this embodiment of this application, the connection may include various interfaces, transmission lines, buses, or the like. This is not limited in this embodiment. The antenna 815 is connected to the transceiver 813. The network interface 814 is configured to enable the communication apparatus to communicate with another communication device through a communication link. For example, the network interface 814 may include a network interface, for example, an S1 interface, between the communication apparatus and a core network device. The network interface may include a network interface, for example, an X2 or an Xn interface, between the communication apparatus and another communication apparatus (for example, another network device or a core network device).

The processor 811 is mainly configured to: process a communication protocol and communication data, control the entire communication apparatus, execute a software program, and process data of the software program, for example, is configured to support the communication apparatus in performing actions described in embodiments. The communication apparatus may include a baseband processor and a central processing unit. The baseband processor is mainly configured to process the communication protocol and the communication data. The central processing unit is mainly configured to: control an entire terminal device, execute the software program, and process the data of the software program. The processor 811 in FIG. 8 may integrate functions of the baseband processor and the central processing unit. A person skilled in the art may understand that the baseband processor and the central processing unit each may be an independent processor, and are interconnected through a technology such as a bus. A person skilled in the art may understand that the terminal device may include a plurality of baseband processors to adapt to different network standards, and the terminal device may include a plurality of central processing units to enhance processing capabilities of the terminal device, and components of the terminal device may be connected through various buses. The baseband processor may also be expressed as a baseband processing circuit or a baseband processing chip. The central processing unit may also be expressed as a central processing circuit or a central processing chip. A function of processing the communication protocol and the communication data may be built in the processor, or may be stored in the memory in a form of a software program, and the processor executes the software program to implement a baseband processing function.

The memory is mainly configured to store the software program and data. The memory 812 may exist independently, and is connected to the processor 811. Optionally, the memory 812 may be integrated with the processor 811, for example, integrated into a chip. The memory 812 may store program code for executing the technical solutions in embodiments of this application, and the processor 811 controls execution of the program code. Various types of computer program code that are executed may also be considered as drivers of the processor 811.

FIG. 8 shows only one memory and one processor. In an actual terminal device, there may be a plurality of processors and a plurality of memories. The memory may also be referred to as a storage medium, a storage device, or the like. The memory may be a storage element on a same chip as the processor, that is, an on-chip storage element, or may be an independent storage element. This is not limited in this embodiment of this application.

The transceiver 813 may be configured to support receiving or sending of a radio frequency signal between the communication apparatus and a terminal, and the transceiver 813 may be connected to the antenna 815. The transceiver 813 includes a transmitter machine Tx and a receiver machine Rx. Specifically, the one or more antennas 815 may receive the radio frequency signal. The receiver machine Rx of the transceiver 813 is configured to: receive the radio frequency signal from the antenna, convert the radio frequency signal into a digital baseband signal or a digital intermediate frequency signal, and provide the digital baseband signal or the digital intermediate frequency signal to the processor 811, so that the processor 811 performs further processing, for example, demodulation processing and decoding processing, on the digital baseband signal or the digital intermediate frequency signal. In addition, the transmitter machine Tx of the transceiver 813 is further configured to: receive a modulated digital baseband signal or digital intermediate frequency signal from the processor 811, convert the modulated digital baseband signal or digital intermediate frequency signal into a radio frequency signal, and transmit the radio frequency signal through the one or more antennas 815. Specifically, the receiver machine Rx may selectively perform one-level or multi-level down mixing processing and analog-to-digital conversion processing on the radio frequency signal, to obtain the digital baseband signal or the digital intermediate frequency signal. A sequence of the down mixing processing and the analog-to-digital conversion processing may be adjusted. The transmitter machine Tx may selectively perform one-level or multi-level up mixing processing and digital-to-analog conversion processing on the modulated digital baseband signal or digital intermediate frequency signal, to obtain the radio frequency signal. A sequence of the up mixing processing and the digital-to-analog conversion processing may be adjusted. The digital baseband signal and the digital intermediate frequency signal may be collectively referred to as a digital signal.

The transceiver may also be referred to as a transceiver unit, a transceiver machine, a transceiver apparatus, or the like. Optionally, a component configured to implement a receiving function in the transceiver unit may be considered as a receiving unit, and a component configured to implement a sending function in the transceiver unit may be considered as a sending unit. In other words, the transceiver unit includes the receiving unit and the sending unit. The receiving unit may also be referred to as a receiver machine, an input port, a receiving circuit, or the like. The sending unit may be referred to as a transmitter machine, a transmitter, a transmission circuit, or the like.

It should be noted that the communication apparatus shown in FIG. 8 may be specifically configured to implement steps implemented by the network device in the foregoing method embodiments, and implement technical effects corresponding to the network device. For a specific implementation of the communication apparatus shown in FIG. 8, refer to the descriptions in the foregoing method embodiments. Details are not described herein again.

An embodiment of this application further provides a computer-readable storage medium. The computer-readable storage medium is configured to store one or more computer-executable instructions. When the computer-executable instructions are executed by a processor, the processor performs the method according to the possible implementations of the communication apparatus (which is implemented by using the first terminal device) in the foregoing embodiments.

An embodiment of this application further provides a computer-readable storage medium. The computer-readable storage medium is configured to store one or more computer-executable instructions. When the computer-executable instructions are executed by a processor, the processor performs the method according to the possible implementations of the communication apparatus (which is implemented by using the network device) in the foregoing embodiments.

An embodiment of this application further provides a computer program product (or referred to as a computer program). When the computer program product is executed by the processor, the processor performs the method according to the possible implementations of the communication apparatus (which is implemented by using the first terminal device).

An embodiment of this application further provides a computer program product (or referred to as a computer program). When the computer program product is executed by the processor, the processor performs the method according to the possible implementations of the communication apparatus (which is implemented by using the network device).

An embodiment of this application further provides a chip system. The chip system includes at least one processor, configured to support a first terminal device in implementing a function in the possible implementations of the communication apparatus. Optionally, the chip system further includes an interface circuit, and the interface circuit provides program instructions and/or data for the at least one processor. In a possible design, the chip system may further include a memory. The memory is configured to store program instructions and data that are necessary for the first terminal device. The chip system may include a chip, or may include a chip and another discrete component.

An embodiment of this application further provides a chip system. The chip system includes at least one processor, configured to support a network device in implementing a function in the possible implementations of the communication apparatus. Optionally, the chip system further includes an interface circuit, and the interface circuit provides program instructions and/or data for the at least one processor. In a possible design, the chip system may further include a memory. The memory is configured to store program instructions and data that are necessary for the network device. The chip system may include a chip, or may include a chip and another discrete component. The network device may be specifically the network device in the foregoing method embodiments.

An embodiment of this application further provides a communication system. The network system architecture includes the communication apparatus (which includes the first terminal device and the network device) in any one of the foregoing embodiments.

In several embodiments provided in this application, it should be understood that the disclosed system, apparatus, and method may be implemented in other manners. For example, the described apparatus embodiments are merely examples. For example, division into the units is merely logical function division. There may be another division manner during actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of embodiments.

In addition, functional units in embodiments of this application may be integrated into one processing unit, each of the units may exist alone physically, or two or more units are integrated into one unit. The integrated unit may be implemented in a form of hardware, or may be implemented in a form of a software functional unit. When the integrated unit is implemented in the form of the software functional unit and sold or used as an independent product, the integrated unit may be stored in a computer-readable storage medium. Based on such an understanding, the technical solutions of this application essentially, or the part contributing to a conventional technology, or all or some of the technical solutions may be implemented in the form of a software product. The computer software product is stored in a storage medium and includes several instructions for instructing a computer device (which may be a personal computer, a server, a network device, or the like) to perform all or some of the steps of the methods described in embodiments of this application. The storage medium includes any medium that can store program code, such as a USB flash drive, a removable hard disk, a read-only memory (ROM, Read-Only Memory), a random access memory (RAM, Random Access Memory), a magnetic disk, or an optical disc.

The foregoing descriptions are merely specific implementations of embodiments of this application. However, the protection scope of embodiments of this application is not limited thereto. Any change or replacement readily figured out by a person skilled in the art within the technical scope disclosed in embodiments of this application shall fall within the protection scope of embodiments of this application. Therefore, the protection scope of embodiments of this application shall be subject to the protection scope of the claims.

**Claims**

1. A communication method, comprising:

   receiving first information, wherein the first information is used for determining a first parameter, the first parameter is used for determining channel information of a channel between a network device and a first terminal device when data streams of at least two terminal devices multiplex a same time-frequency resource, and the at least two terminal devices comprise the first terminal device;

receiving a demodulation reference signal DMRS and downlink data; and
determining downlink channel information based on the DMRS and the first parameter, wherein the downlink channel information is used for demodulating the downlink data.

2. The method according to claim 1, wherein the first information comprises at least one of the following:

a layer quantity of a data stream the first terminal device;
an index of a matrix that corresponds to the first parameter and that is in a preconfigured matrix set, wherein the matrix set comprises at least two matrices;
a left singular vector obtained through matrix decomposition based on the channel information of the channel between the network device and the first terminal device; or
the first parameter.

3. The method according to claim 1 or 2, wherein a matrix dimension of the matrix corresponding to the first parameter is equal to a quantity of receive ports of the first terminal device.

4. The method according to any one of claims 1 to 3, wherein the downlink data and a data stream of another terminal device multiplex a same time-frequency resource.

5. The method according to any one of claims 1 to 4, wherein a rank of the matrix corresponding to the first parameter is greater than or equal to the layer quantity of the data stream of the first terminal device; and
the layer quantity of the data stream of the first terminal device is a scalar, or a value of the layer quantity of the data stream of the first terminal device is a value of a layer sequence number of the data stream of the first terminal device in the data streams of the at least two terminal devices.

6. The method according to any one of claims 1 to 5, wherein a value of the scalar of the layer quantity of the data stream of the first terminal device or a value of a vector dimension of the data stream of the first terminal device satisfies at least one of the following:
not less than a quantity of real-time scheduled layers of the first terminal device, not greater than a quantity of channel multipaths or a rank of a channel matrix of the first terminal device, or not less than a quantity of multiplexed ports of a demodulation reference signal sending port.

7. The method according to any one of claims 1 to 6, wherein before receiving the first information, the method further comprises:
sending a first reference signal, wherein the first reference signal is used for determining the first parameter.

8. The method according to any one of claims 1 to 7, wherein the DMRS and the downlink data are obtained by performing precoding based on the first parameter.

9. The method according to any one of claims 1 to 8, wherein after receiving the first information, the method further comprises:

receiving a second reference signal, wherein the second reference signal is generated based on the first parameter; and
sending a measurement result of the second reference signal, wherein the measurement result of the second reference signal is used for determining precoding information of the DMRS and the downlink data.

10. The method according to any one of claims 1 to 9, wherein after receiving the first information, the method further comprises:
sending a third reference signal, wherein the third reference signal is generated based on the first parameter, and the third reference signal is used for determining the precoding information of the DMRS and the downlink data.

11. A communication method, comprising:

sending first information, wherein the first information is used for determining a first parameter, the first parameter is used for determining channel information of a channel between a network device and a first terminal device when data streams of at least two terminal devices multiplex a same time-frequency resource, and the at least two terminal devices comprise the first terminal device; and

sending a demodulation reference signal DMRS and downlink data, wherein the DMRS and the first parameter are used for determining downlink channel information, and the downlink channel information is used for demodulating the downlink data.

12. The method according to claim 11, wherein the first information comprises at least one of the following:

a layer quantity of a data stream the first terminal device;
an index of a matrix that corresponds to the first parameter and that is in a preconfigured matrix set, wherein the matrix set comprises at least two matrices;
a left singular vector obtained through matrix decomposition based on the channel information of the channel between the network device and the first terminal device; or
the first parameter.

13. The method according to claim 11 or 12, wherein a matrix dimension of the matrix corresponding to the first parameter is equal to a quantity of receive ports of the first terminal device.

14. The method according to any one of claims 11 to 13, wherein the downlink data and a data stream of another terminal device multiplex a same time-frequency resource.

15. The method according to any one of claims 11 to 14, wherein a rank of the matrix corresponding to the first parameter is greater than or equal to the layer quantity of the data stream of the first terminal device; and
the layer quantity of the data stream of the first terminal device is a scalar, or a value of the layer quantity of the data stream of the first terminal device is a value of a layer sequence number of the data stream of the first terminal device in the data streams of the at least two terminal devices.

16. The method according to any one of claims 11 to 15, wherein a value of the scalar of the layer quantity of the data stream of the first terminal device or a value of a vector dimension of the data stream of the first terminal device satisfies at least one of the following:
not less than a quantity of real-time scheduled layers of the first terminal device, not greater than a quantity of channel multipaths or a rank of a channel matrix of the first terminal device, or not less than a quantity of multiplexed ports of a demodulation reference signal sending port.

17. The method according to any one of claims 11 to 16, wherein before sending the first information, the method further comprises:
receiving a first reference signal, wherein the first reference signal is used for determining the first parameter.

18. The method according to any one of claims 11 to 17, wherein the DMRS and the downlink data are obtained by performing precoding based on the first parameter.

19. The method according to any one of claims 11 to 18, wherein after sending the first information, the method further comprises:

sending a second reference signal, wherein the second reference signal is generated based on the first parameter; and
receiving a measurement result of the second reference signal, wherein the measurement result of the second reference signal is used for determining precoding information of the DMRS and the downlink data.

20. The method according to any one of claims 11 to 19, wherein after sending the first information, the method further comprises:
receiving a third reference signal, wherein the third reference signal is generated based on the first parameter, and the third reference signal is used for determining the precoding information of the DMRS and the downlink data.

21. A communication apparatus, comprising a transceiver unit and a processing unit, wherein

the transceiver unit is configured to receive first information, wherein the first information is used for determining a first parameter, the first parameter is used for determining channel information of a channel between a network device and a first terminal device when data streams of at least two terminal devices multiplex a same time-frequency resource, and the at least two terminal devices comprise the first terminal device;

the transceiver unit is further configured to receive a demodulation reference signal DMRS and downlink data; and

the processing unit is configured to determine downlink channel information based on the DMRS and the first parameter, wherein the downlink channel information is used for demodulating the downlink data.

22. The apparatus according to claim 21, wherein the first information comprises at least one of the following:

a layer quantity of a data stream the first terminal device;

an index of a matrix that corresponds to the first parameter and that is in a preconfigured matrix set, wherein the matrix set comprises at least two matrices;

a left singular vector obtained through matrix decomposition based on the channel information of the channel between the network device and the first terminal device; or

the first parameter.

23. The apparatus according to claim 21 or 22, wherein a matrix dimension of the matrix corresponding to the first parameter is equal to a quantity of receive ports of the first terminal device.

24. The apparatus according to any one of claims 21 to 23, wherein the downlink data and a data stream of another terminal device multiplex a same time-frequency resource.

25. The apparatus according to any one of claims 21 to 24, wherein a rank of the matrix corresponding to the first parameter is greater than or equal to the layer quantity of the data stream of the first terminal device; and

the layer quantity of the data stream of the first terminal device is a scalar, or a value of the layer quantity of the data stream of the first terminal device is a value of a layer sequence number of the data stream of the first terminal device in the data streams of the at least two terminal devices.

26. The apparatus according to any one of claims 21 to 25, wherein a value of the scalar of the layer quantity of the data stream of the first terminal device or a value of a vector dimension of the data stream of the first terminal device satisfies at least one of the following:

not less than a quantity of real-time scheduled layers of the first terminal device, not greater than a quantity of channel multipaths or a rank of a channel matrix of the first terminal device, or not less than a quantity of multiplexed ports of a demodulation reference signal sending port.

27. The apparatus according to any one of claims 21 to 26, wherein the transceiver unit is further configured to send a first reference signal, and the first reference signal is used for determining the first parameter.

28. The apparatus according to any one of claims 21 to 27, wherein the DMRS and the downlink data are obtained by performing precoding based on the first parameter.

29. The apparatus according to any one of claims 21 to 28, wherein

the transceiver unit is further configured to receive a second reference signal, and the second reference signal is generated based on the first parameter; and

the transceiver unit is further configured to send a measurement result of the second reference signal, and the measurement result of the second reference signal is used for determining precoding information of the DMRS and the downlink data.

30. The apparatus according to any one of claims 21 to 29, wherein

the transceiver unit is further configured to send a third reference signal, the third reference signal is generated based on the first parameter, and the third reference signal is used for determining the precoding information of the DMRS and the downlink data.

31. A communication apparatus, comprising a transceiver unit and a processing unit, wherein

the processing unit is configured to determine first information, a demodulation reference signal DMRS, and downlink data;

the transceiver unit is configured to send the first information, wherein the first information is used for determining a first parameter, the first parameter is used for determining channel information of a channel between a network device and a first terminal device when data streams of at least two terminal devices multiplex a same time-frequency resource, and the at least two terminal devices comprise the first terminal device; and
the transceiver unit is further configured to send the DMRS and the downlink data, wherein the DMRS and the first parameter are used for determining downlink channel information, and the downlink channel information is used for demodulating the downlink data.

32. The apparatus according to claim 31, wherein the first information comprises at least one of the following:

a layer quantity of a data stream the first terminal device;
an index of a matrix that corresponds to the first parameter and that is in a preconfigured matrix set, wherein the matrix set comprises at least two matrices;
a left singular vector obtained through matrix decomposition based on the channel information of the channel between the network device and the first terminal device; or
the first parameter.

33. The apparatus according to claim 31 or 32, wherein a matrix dimension of the matrix corresponding to the first parameter is equal to a quantity of receive ports of the first terminal device.

34. The apparatus according to any one of claims 31 to 33, wherein the downlink data and a data stream of another terminal device multiplex a same time-frequency resource.

35. The apparatus according to any one of claims 31 to 34, wherein a rank of the matrix corresponding to the first parameter is greater than or equal to the layer quantity of the data stream of the first terminal device; and
the layer quantity of the data stream of the first terminal device is a scalar, or a value of the layer quantity of the data stream of the first terminal device is a value of a layer sequence number of the data stream of the first terminal device in the data streams of the at least two terminal devices.

36. The apparatus according to any one of claims 31 to 35, wherein a value of the scalar of the layer quantity of the data stream of the first terminal device or a value of a vector dimension of the data stream of the first terminal device satisfies at least one of the following:
not less than a quantity of real-time scheduled layers of the first terminal device, not greater than a quantity of channel multipaths or a rank of a channel matrix of the first terminal device, or not less than a quantity of multiplexed ports of a demodulation reference signal sending port.

37. The apparatus according to any one of claims 31 to 36, wherein the transceiver unit is further configured to receive a first reference signal, and the first reference signal is used for determining the first parameter.

38. The apparatus according to any one of claims 31 to 37, wherein the DMRS and the downlink data are obtained by performing precoding based on the first parameter.

39. The apparatus according to any one of claims 31 to 38, wherein

the transceiver unit is further configured to send a second reference signal, and the second reference signal is generated based on the first parameter; and
the transceiver unit is further configured to receive a measurement result of the second reference signal, and the measurement result of the second reference signal is used for determining precoding information of the DMRS and the downlink data.

40. The apparatus according to any one of claims 31 to 39, wherein
the transceiver unit is further configured to receive a third reference signal, the third reference signal is generated based on the first parameter, and the third reference signal is used for determining the precoding information of the DMRS and the downlink data.

41. A communication apparatus, comprising at least one logic circuit and an input/output interface, wherein

the input/output interface is configured to input first information, a demodulation reference signal DMRS, and downlink data; and
the logic circuit is configured to perform the method according to any one of claims 1 to 10.

42. A communication apparatus, comprising at least one logic circuit and an input/output interface, wherein

the input/output interface is configured to output first information, a demodulation reference signal DMRS, and downlink data; and
the logic circuit is configured to perform the method according to any one of claims 11 to 20.

43. A communication system, wherein

the communication system comprises the communication apparatus according to any one of claims 21 to 30 and the communication apparatus according to any one of claims 31 to 40; or
the communication system comprises the communication apparatus according to claim 41 and the communication apparatus according to claim 42.

44. A computer-readable storage medium, wherein the medium stores instructions, and when the instructions are executed by a computer, the method according to any one of claims 1 to 20 is implemented.

45. A computer program product, comprising instructions, wherein when the instructions are run on a computer, the computer is enabled to perform the method according to any one of claims 1 to 20.

FIG. 1a

Scenario 1

Scenario 2

FIG. 1b

FIG. 2

FIG. 3

FIG. 4a

FIG. 4b

| Network device | | First terminal device |
| --- | --- | --- |

S301: First information →

← D: Third reference signal

S302: DMRS and downlink data →

S303: Determine downlink channel information based on the DMRS and a first parameter

FIG. 4c

─ 500

Communication apparatus

─ 501 ─ 502

| Processing unit | | Transceiver unit |
| --- | --- | --- |

FIG. 5

600

Communication apparatus

601

602

Logic circuit

Input/Output interface

FIG. 6

700

Communication apparatus

702

701

Communication port

Processor

704

703

Memory

FIG. 7

FIG. 8

## INTERNATIONAL SEARCH REPORT

| International application No. |
| --- |
| **PCT/CN2023/085696** |

| A. | CLASSIFICATION OF SUBJECT MATTER |
| --- | --- |

H04L 5/00(2006.01)i

According to International Patent Classification (IPC) or to both national classification and IPC

| B. | FIELDS SEARCHED |
| --- | --- |

Minimum documentation searched (classification system followed by classification symbols)

IPC: H04L, H04W

Documentation searched other than minimum documentation to the extent that such documents are included in the fields searched

Electronic data base consulted during the international search (name of data base and, where practicable, search terms used)

CNTXT, DWPI, ENTXT, ENTXTC, VEN, WPABS, WPABSC, 3GPP: 复用, 资源, 解调, 流数, 下行数据, DMRS, 信道信息, 终端, 两个, 多个, 矩阵, 索引, multiplexing, resource, demodulation, number of streams, downlink data, channel information, terminal, two, multiple, matrix, index

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| Y | WO 2022147802 A1 (HUAWEI TECHNOLOGIES CO., LTD.) 14 July 2022 (2022-07-14) description, pages 1-8 | 1-45 |
| Y | WO 2023011518 A1 (HUAWEI TECHNOLOGIES CO., LTD.) 09 February 2023 (2023-02-09) description, pages 1-22 | 1-45 |
| A | CN 109391398 A (CHINA ACADEMY OF TELECOMMUNICATIONS TECHNOLOGY) 26 February 2019 (2019-02-26) entire document | 1-45 |
| A | CN 111147206 A (RESEARCH INSTITUTE OF CHINA MOBILE COMMUNICATIONS CORPORATION et al.) 12 May 2020 (2020-05-12) entire document | 1-45 |
| A | CN 111867038 A (HUAWEI TECHNOLOGIES CO., LTD.) 30 October 2020 (2020-10-30) entire document | 1-45 |

☐ Further documents are listed in the continuation of Box C.    ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
| --- | --- |
| **07 December 2023** | **18 December 2023** |

| Name and mailing address of the ISA/CN | Authorized officer |
| --- | --- |
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

International application No.

**PCT/CN2023/085696**

| Patent document cited in search report | | | Publication date (day/month/year) | Patent family member(s) | | | Publication date (day/month/year) |
|---|---|---|---|---|---|---|---|
| WO | 2022147802 | A1 | 14 July 2022 | None | | | |
| WO | 2023011518 | A1 | 09 February 2023 | None | | | |
| CN | 109391398 | A | 26 February 2019 | None | | | |
| CN | 111147206 | A | 12 May 2020 | None | | | |
| CN | 111867038 | A | 30 October 2020 | WO | 2020216130 | A1 | 29 October 2020 |

Form PCT/ISA/210 (patent family annex) (July 2022)